(19) Europäisches Patentamt
European Patent Office
Office européen des brevets

(11) **EP 4 738 108 A1**

(12) **EUROPEAN PATENT APPLICATION**

(43) Date of publication:
06.05.2026 Bulletin 2026/19

(21) Application number: 25207000.8

(22) Date of filing: 06.10.2025

(51) International Patent Classification (IPC):
*G06F 9/30* (2018.01) *G06F 9/38* (2018.01)

(52) Cooperative Patent Classification (CPC):
G06F 9/3836; G06F 9/30014; G06F 9/30036;
G06F 9/3838; G06F 9/3853; G06F 9/3887;
G06F 9/3889; G06F 9/3893

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.10.2024 US 202418933632

(71) Applicant: Microsoft Technology Licensing, LLC
Redmond, WA 98052 (US)

(72) Inventors:
• BHOJARAJA, DUSHYANTH
Redmond, 98052 (US)
• THAJUDEEN, TARIQ AHMED
Redmond, 98052 (US)
• LOU, DENNIS CLAYTON
Redmond, 98052 (US)
• RODRIGUES, PEDRO H. M.
Redmond, 98052 (US)
• HAN, KYUNG-NAM
Redmond, 98052 (US)
• ALEXANDER, KHARY JASON
Redmond, 98052 (US)

(74) Representative: CMS Cameron McKenna Nabarro
Olswang LLP
Cannon Place
78 Cannon Street
London EC4N 6AF (GB)

(54) **PROCESSOR PERFORMANCE ACCELERATION USING HARDWARE-ENHANCED MULTIPLY-ACCUMULATE STREAMING**

(57) Systems and methods are provided for processor performance acceleration using hardware-enhanced multiply-accumulate streaming. In examples, a dispatcher of a processor dispatches each of two or more multiply-accumulate ("MAC") or arithmetic logic unit ("ALU") instructions (and corresponding input data values), which are directed to a pipeline processing system and received in two or more consecutive clock cycles, to one of a set of input registers among a plurality of sets of input registers based on a sub-stream among a plurality of sub-streams, into which the two or more MAC or ALU instructions have been divided. The input data values for the plurality of sub-streams are processed by a MAC device or an ALU device in consecutive clock cycles, with output values from each sub-stream being stored in a sub-stream accumulator for that sub-stream, the accumulated value of which are added to a pipeline accumulator after all sub-streams have been processed.

Fig. 1A

EP 4 738 108 A1

**Description**

**BACKGROUND**

With the growing popularity and increasing use of artificial intelligence ("AI") systems (such as generative AI systems like large language models ("LLMs")), the number of AI and/or machine learning ("ML") tasks continues to increase exponentially. AI/ML tasks heavily employ multiply-accumulate ("MAC") operations and/or other arithmetic logic unit ("ALU") operations. As MAC and/or ALU operations increase in complexity with the growth of the generative AI systems, the number of clock cycles (or latency) for completing each MAC or ALU operation increases. Due to such latency, processors typically have to wait for completion of the MAC or ALU operation before processing the next MAC or ALU operation. Performance of the processor is thus impacted. It is with respect to this general technical environment to which aspects of the present disclosure are directed. In addition, although relatively specific problems have been discussed, it should be understood that the examples should not be limited to solving the specific problems identified in the background.

**SUMMARY**

This summary is provided to introduce a selection of concepts in a simplified form that are further described below in the detailed description section. This summary is not intended to identify key features or essential features of the claimed subject matter, nor is it intended as an aid in determining the scope of the claimed subject matter.

The currently disclosed technology, among other things, provides for processor performance acceleration using hardware-enhanced multiply-accumulate streaming. In examples, a dispatcher of a processor receives two or more first MAC or ALU instructions in two or more consecutive clock cycles of the processor. Each first MAC or ALU instruction is directed to a first pipeline processing system among one or more pipeline processing systems of the processor to process input data using either a corresponding first MAC operation among two or more first MAC operations or a corresponding first ALU operation among two or more first ALU operations. The dispatcher dispatches each of the two or more first MAC or ALU instructions and corresponding each of two or more sets of input data values to one of a set of input registers among a plurality of sets of input registers based on a sub-stream among a plurality of sub-streams. In some cases, a number of sets of the plurality of sets of input registers corresponds to a number of sub-streams for processing the two or more first MAC or ALU instructions, the two or more sets of input data values for the plurality of sub-streams being processed by a MAC device or an ALU device of a processing engine in consecutive clock cycles. In some instances, an output value from the MAC device or the ALU device corresponding to each sub-stream is stored in an accumulator register for that sub-stream, among a plurality of accumulators corresponding to the plurality of sub-streams. In some examples, a sub-stream accumulated value that is stored in the accumulator register corresponding to each sub-stream is added to an accumulated value that is stored in a pipeline accumulator as the MAC device completes MAC operations or the ALU device completes ALU operations for that sub-stream. In response to receiving, in a clock cycle following receipt of the two or more first MAC instructions, one of a pipeline bubble that corresponds to an absence of a MAC/ALU instruction or a second MAC/ALU instruction directed to a second pipeline processing system among the one or more pipeline processing systems, the dispatcher initiates a pipeline complete phase in which subsequent MAC/ALU instructions that are received by the dispatcher are directed away from the first pipeline processing system. After the accumulated values corresponding to all of the plurality of sub-streams have been added to the accumulated value that is stored in the pipeline accumulator register, the first pipeline processing system outputs the accumulated value.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

**BRIEF DESCRIPTION OF THE DRAWINGS**

A further understanding of the nature and advantages of particular embodiments may be realized by reference to the remaining portions of the specification and the drawings, which are incorporated in and constitute a part of this disclosure.

Figs. 1A and 1B depict example systems for implementing processor performance acceleration using hardware-enhanced multiply-accumulate streaming.
Figs. 2A and 2B depict example data flows that are each managed by a dispatcher(s) when implementing processor performance acceleration using hardware-enhanced multiply-accumulate streaming.
Fig. 3 depicts an example sequence flow representing a state machine for controlling vector multiplier-accumulator ("VMAC") streaming when implementing processor performance acceleration using hardware-enhanced multiply-accumulate streaming.

Fig. 4 depicts an example pipelining diagram that corresponds to implementation of processor performance acceleration using hardware-enhanced multiply-accumulate streaming.

Figs. 5A and 5B depict an example method for implementing processor performance acceleration using hardware-enhanced multiply-accumulate streaming.

Figs. 6A and 6B depict another example method for implementing processor performance acceleration using hardware-enhanced multiply-accumulate streaming.

Fig. 7 depicts yet another example method for implementing processor performance acceleration using hardware-enhanced multiply-accumulate streaming.

Fig. 8 depicts a block diagram illustrating example physical components of a computing device with which aspects of the technology may be practiced.

## DETAILED DESCRIPTION OF CERTAIN EMBODIMENTS

As briefly discussed above, the number and complexity of MAC and/or ALU operations has increased and will continue to increase, due to the growing popularity and increasing use of AI systems, such as LLMs. As MAC and/or ALU operations increase in complexity with the growth of the AI systems, the number of clock cycles (or latency) for completing each MAC or ALU operation increases. Due to such latency, processors typically have to wait for completion of the MAC or ALU operation before processing the next MAC or ALU operation, which greatly impacts the performance of the processor.

The present technology provides for processor performance acceleration using hardware-enhanced multiply-accumulate streaming. In particular, a modified dispatcher is provided that, based on a state machine as described in detail below, divides two or more MAC or ALU instructions (and corresponding sets of input data values) - which are directed to a first pipeline processing system and which are received in two or more consecutive clock cycles of the processor - into a plurality of sub-streams based on MAC or ALU operational latency in terms of a number of clock cycles of the processor that is used to complete a single MAC or ALU operation among two or more MAC or ALU operations corresponding to the two or more MAC or ALU instructions. The modified dispatcher dispatches each of the two or more MAC or ALU instructions (and corresponding each of the two or more sets of input data values) to one of a set of input registers among a plurality of sets of input registers based on a sub-stream among a plurality of sub-streams, where a number of sets of the plurality of sets of input registers corresponds to a number of sub-streams for processing the two or more MAC or ALU instructions. The two or more sets of input data values for the plurality of sub-streams are processed by a MAC device or an ALU device of a processing engine in consecutive clock cycles. An output value from the MAC device or the ALU device corresponding to each sub-stream is stored in a sub-stream accumulator register for that sub-stream, among a plurality of accumulators corresponding to the plurality of sub-streams. The value that is stored in the sub-stream accumulator register corresponding to each sub-stream is added to an accumulated value that is stored in a pipeline accumulator register as the MAC device completes MAC operations or the ALU device completes ALU operations for that sub-stream. When the modified dispatcher receives, in a clock cycle following receipt of the two or more MAC or ALU instructions, a pipeline bubble corresponding to an absence of a MAC/ALU instruction or a MAC/ALU instruction directed to another pipeline processing system, the modified dispatcher initiates a pipeline complete phase in which subsequent MAC/ALU instructions that are received by the modified dispatcher are directed away from the pipeline processing system. After the values corresponding to all of the plurality of sub-streams have been added to the accumulated value stored in the pipeline accumulator register, the pipeline processing system outputs the accumulated value. In this manner, the sub-streaming improves performance of the processor, by efficiently processing MAC or ALU operations during latency cycles during which typical processors are left waiting. In some cases, 50 % or greater performance boost can be achieved. This is particularly impactful when there are thousands or tens of thousands of MAC or ALU operations to calculate (such as with the thousands or tens of thousands of LLM tokens that have to be processed in mean operations, sum operations, etc., prior to processing squaring operations, square root operations, or standard deviation operations when performing SoftMax or LayerNorm operations, or the like).

Various modifications and additions can be made to the embodiments discussed herein without departing from the scope of the disclosed techniques. For example, while the embodiments described above refer to particular features, the scope of the disclosed techniques also includes embodiments having different combinations of features and embodiments that do not include all of the above-described features.

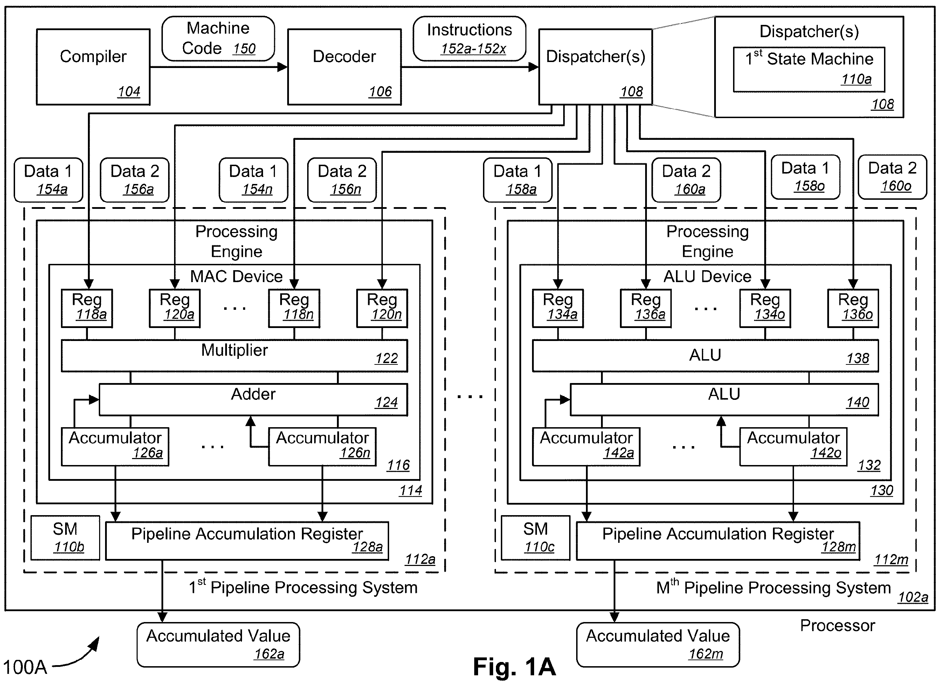

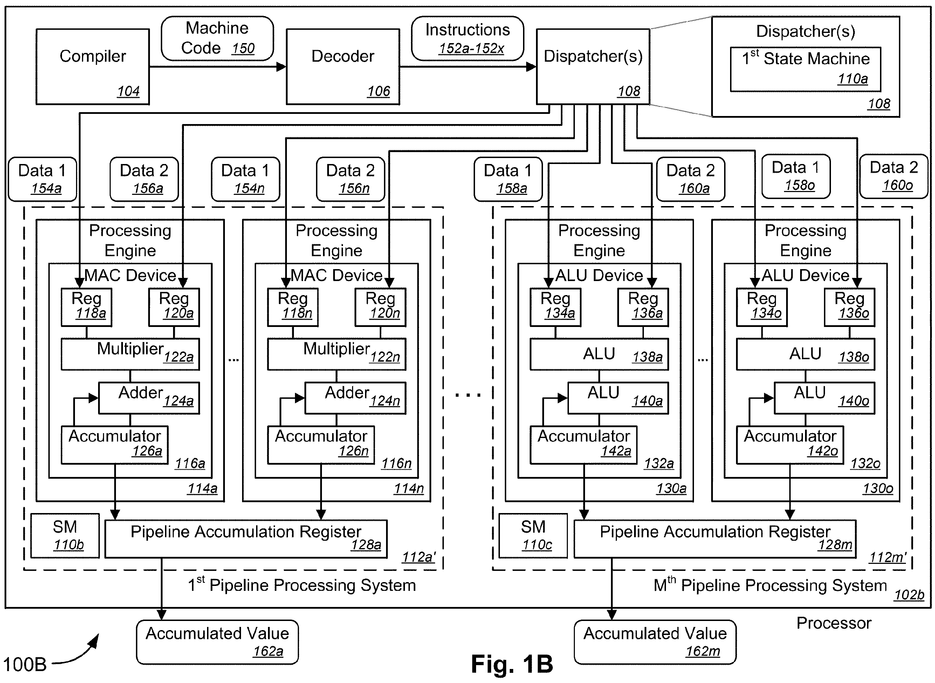

Turning to the embodiments as illustrated by the drawings, Figs. 1-7 illustrate some of the features of methods, systems, and apparatuses for implementing processor performance acceleration using hardware-enhanced multiply-accumulate streaming, as referred to above. The methods, systems, and apparatuses illustrated by Figs. 1-7 refer to examples of different embodiments that include various components and steps, which can be considered alternatives or which can be used in conjunction with one another in the various embodiments. The description of the illustrated methods, systems, and apparatuses shown in Figs. 1-7 is provided for purposes of illustration and should not be considered to limit the scope of the different embodiments.

Figs. 1A and 1B depict example systems 100A and 100B for implementing processor performance acceleration using hardware-enhanced multiply-accumulate streaming. Fig. 1A is directed to an example system 100A in which each pipeline processing system 112 has either one processing engine 114 and one MAC device 116 (with one set of multiplier 122 and adder 124) or one processing engine 130 and one ALU device 132 (with one set of ALUs 138 and 140), and with multiple sets of registers, each set corresponding to one of a plurality of sub-streams. Fig. 1B is directed to an example system 100B in which each pipeline processing system 112 has either a plurality of processing engines 116a-116n, each having its own MAC device (one of MAC devices 116a-116n, with corresponding one of multipliers 122a-122n and one of adders 124a-124n) or a plurality of processing engines 130a-130o, each having its own ALU device (one of ALU devices 132a-132o, with corresponding one of ALUs 138a-138o and one of ALUs 140a-140o). Example system 100B is otherwise similar, if not identical to example system 100A.

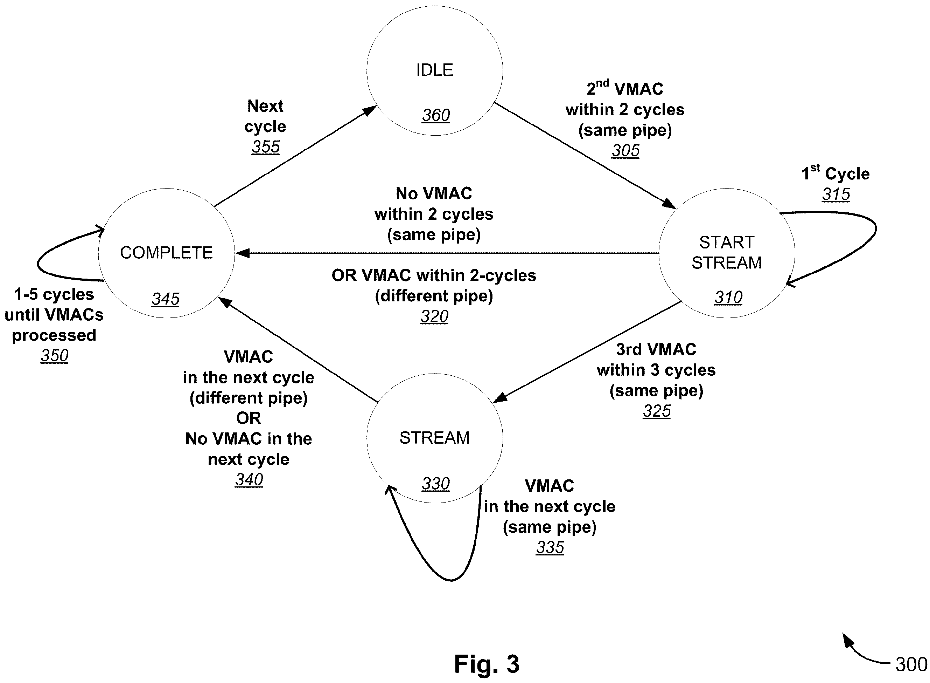

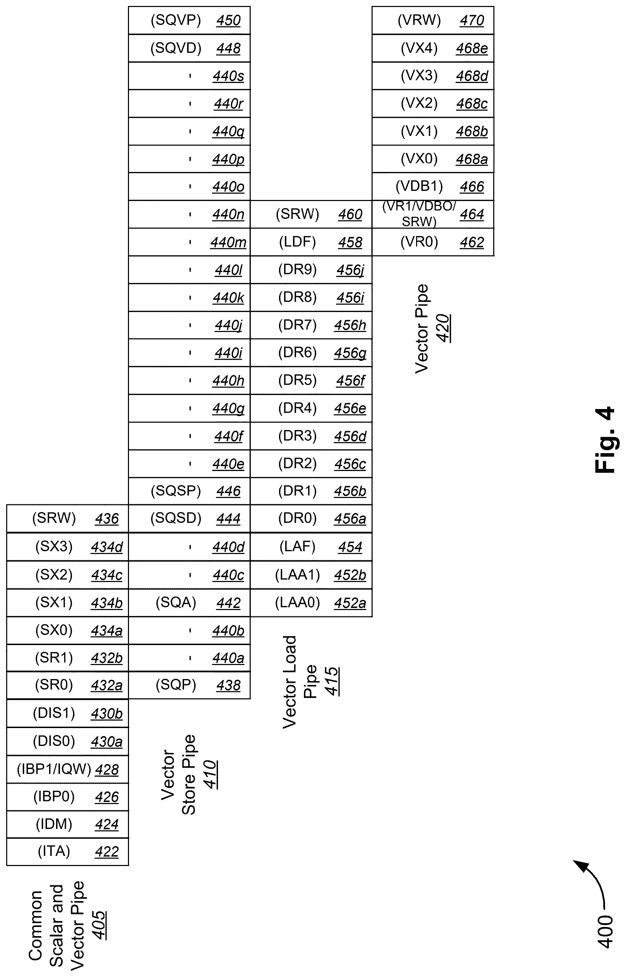

With reference to Fig. 1A, system 100A includes a processor 102a, including a compiler 104, a decoder 106, and a dispatcher(s) 108. The dispatcher(s) 108 includes a first state machine 110a, an example representation of which is shown in Fig. 3. The dispatcher(s) 108, which may be a superscalar dispatcher(s), is different from ordinary dispatchers or schedulers at least in terms of its functionalities associated with the first state machine 110a, as described in detail below. As used herein, a superscalar dispatcher is a dispatcher that dispatches to multiple execution units in different pipes for parallel execution (as shown, e.g., in Fig. 4 where two or more of the four pipes 405-420 can perform parallel operations during vertically aligned blocks, each block representing an operation during a clock cycle). In some examples, the compiler 104 and the decoder 106 are disposed within the processor 102a (such as shown in Fig. 1A). In other examples, the compiler 104 and the decoder 106 are disposed external to the processor 102a, with the decoder 106 (and, in some cases, the compiler 104 as well) being communicatively coupled with the processor 102a. The processor 102a further includes a plurality of pipeline processing systems 112a-112m (collectively, "pipeline processing systems 112"). Each pipeline processing system 112 includes either a MAC-based processing engine 114 that includes a MAC device 116 or an ALU-based processing engine 130 that includes an ALU device 132. Each pipeline processor system 112 further includes a state machine 110b or 110c and one of a plurality of pipeline accumulation registers 128a-128m (collectively, "pipeline accumulation registers 128"). In some examples, each state machine 110b or 110c is a duplicate of the first state machine 110a. The dispatcher(s) 108 performs its task of dividing and dispatching MAC and/or ALU streams based on logic of the first state machine 110a, while each pipeline processing system 112a-112m performs its task of combining data corresponding to the plurality of sub-streams based on the logic of the state machine 110b or 110c.

Each MAC device 116 includes a plurality of sets (or pairs) of input registers 118a-118n and 120a-120n, a single multiplier 122, a single adder 124, and a corresponding plurality of accumulators 126a-126n. In an example, n corresponds to a number of sub-streams into which the dispatcher(s) 108 divides incoming MAC streams. In other examples, each MAC device 116 further includes additional input registers to accommodate situations with additional sub-streams, and in the case where there are more sets of input registers 118/120 than sub-streams for a particular MAC stream, one or more sets of input registers 118/120 would remain unused for processing that particular MAC stream.

Each ALU device 132 includes a plurality of sets (or pairs) of input registers 134a-134o and 136a-136o, an ALU 138, an ALU 140, and a corresponding plurality of accumulators 142a-142o. In an example, $o$ corresponds to a number of sub-streams into which the dispatcher(s) 108 divides incoming ALU streams. In other examples, each ALU device 132 further includes additional input registers to accommodate situations with additional sub-streams, and in the case where there are more sets of input registers 134/136 than sub-streams for a particular ALU stream, one or more sets of input registers 134/136 would remain unused for processing that particular ALU stream.

In some aspects, the processor 102a receives MAC and/or ALU instructions in the form of machine code 150 from compiler 104, and decodes the machine code 150 (in some cases, using decoder 106) to produce MAC and/or ALU instructions 152a-152x. Herein, $m, n, o,$ and $x$ are non-negative integer numbers that may be either all the same as each other, all different from each other, or some combination of same and different (e.g., one set of two or more having the same values with the others having different values, a plurality of sets of two or more having the same value with the others having different values).

In examples, the dispatcher(s) 108 receives two or more first MAC instructions in two or more consecutive clock cycles of the processor 102a, the two or more first MAC instructions, in some cases, being included in the decoded MAC and/or ALU instructions 152a-152x. The dispatcher(s) 108 determines whether each of the two or more first MAC instructions are directed to the same pipeline, such as first pipeline processing system 112a. Based on a determination that each of the two or more first MAC instructions is being directed to the first pipeline processing system 112a for processing input data using a corresponding first MAC operation among two or more first MAC operations, the dispatcher(s) 108 divides the two or more first MAC instructions and corresponding two or more sets of input data values into a plurality of sub-streams. In examples, dividing into the plurality of sub-streams is based on MAC operational latency in terms of a number of clock cycles of the processor for completing a single MAC operation among the two or more first MAC operations, in this case, $n$ number of sub-streams (e.g., 3 or 4 or more sub-streams). In an example, the dispatcher(s) 108 dispatches the two or more first MAC instructions and the corresponding two or more sets of input data values divided into the sub-streams to the processing engine 114 and/or the MAC device 116 of the first pipeline processing system 112a. Input data values for each MAC instruction is sent to one set of input registers among the plurality of sets of input registers 118a-118n and 120a-120n, for temporary storage, where the next set of input data values replaces input data values that are being operated on by the multiplier 122 and the adder 124.

For example, a first set of MAC input data values Data 1 154a and Data 2 156a are dispatched to a first set of input registers 118a and 120a, while a second set of MAC input data values Data 1 154b and Data 2 156b are dispatched to a second set of input registers 118b and 120b (not shown in Fig. 1A), and so on ... through an $N^{th}$ set of MAC input data values Data 1 154n and Data 2 156n are dispatched to a second set of input registers 118n and 120n. In a first clock cycle, multiplier 122 multiplies the first set of MAC input data values 154a and 156a that are stored in the first set of input registers 118a and 120a, then adder 124 adds the resultant product to a first accumulated MAC sub-stream value that is stored in a first accumulator 126a, and the resultant sum is stored in the first accumulator 126a. In a second clock cycle, multiplier 122 multiplies the second set of MAC input data values 154b and 156b that are stored in the second set of input registers 118b and 120b, then adder 124 adds the resultant product to a second accumulated MAC sub-stream value that is stored in a second accumulator 126b, and the resultant sum is stored in the second accumulator 126b. And so on, until an $N^{th}$ clock cycle, during which multiplier 122 multiplies the $N^{th}$ set of MAC input data values 154n and 156n that are stored in the $N^{th}$ set of input registers 118n and 120n, then adder 124 adds the resultant product to an $N^{th}$ accumulated MAC sub-stream value that is stored in an $N^{th}$ accumulator 126n, and the resultant sum is stored in the $N^{th}$ accumulator 126n. The cycle repeats for multiplying and adding the next set of input data values 154a-154n and 156a-156n that replace the previous set of input data values stored in registers 118a-118n and 120a-120n, respectively, until the MAC stream has no more MAC instructions and corresponding set of input data values for processing by the first pipeline processing system 112a. At that point, the first through $N^{th}$ accumulated MAC sub-stream values that are stored in the accumulators 126a-126n are added and stored in pipeline accumulation register 128a, and output as accumulated value 162a.

Similarly, in some examples, the dispatcher(s) 108 receives two or more first ALU instructions in two or more consecutive clock cycles of the processor 102a, the two or more first ALU instructions, in some cases, being included in the decoded MAC and/or ALU instructions 152a-152x. The dispatcher(s) 108 determines whether each of the two or more first ALU instructions are directed to the same pipeline, such as $M^{th}$ pipeline processing system 112m. Based on a determination that the each first ALU instruction is being directed to the $M^{th}$ pipeline processing system 112m for processing input data using a corresponding first ALU operation among two or more first ALU operations, the dispatcher(s) 108 divides the two or more first ALU instructions and corresponding two or more sets of input data values into a plurality of sub-streams. In examples, dividing into the plurality of sub-streams is based on ALU operational latency in terms of a number of clock cycles of the processor for completing a single ALU operation among the two or more first ALU operations, in this case, $o$ number of sub-streams (e.g., 3 or 4 or more sub-streams). In an example, the dispatcher(s) 108 dispatches the two or more first ALU instructions and the corresponding two or more sets of input data values divided into the sub-streams to the processing engine 130 and/or the ALU device 132 of the $M^{th}$ pipeline processing system 112m. Input data values for each ALU instruction is sent to one set of input registers among the plurality of sets of input registers 134a-134o and 136a-136o, for temporary storage, where the next set of input data values replaces input data values that are being operated on by the ALU 138 and the ALU 140.

For example, a first set of ALU input data values Data 1 158a and Data 2 160a are dispatched to a first set of input registers 134a and 136a, while a second set of ALU input data values Data 1 158b and Data 2 160b are dispatched to a second set of input registers 134b and 136b (not shown in Fig. 1A), and so on ... through an $O^{th}$ set of ALU input data values Data 1 158o and Data 2 160o are dispatched to a second set of input registers 134o and 136o. In a first clock cycle, ALU 138 performs a first ALU operation on the first set of ALU input data values 158a and 160a that are stored in the first set of input registers 134a and 136a, then ALU 140 performs a second ALU operation on the resultant value to a first accumulated ALU sub-stream value that is stored in a first accumulator 142a, and the resultant value is stored in the first accumulator 142a. In a second clock cycle, ALU 138 performs the first ALU operation on the second set of ALU input data values 158b and 160b that are stored in the second set of input registers 134b and 136b, then ALU 140 performs the second ALU operation on the resultant value to a second accumulated ALU sub-stream value that is stored in a second accumulator 142b, and the resultant value is stored in the second accumulator 142b. And so on, until an $O^{th}$ clock cycle, during which ALU 138 performs the first ALU operation on the $O^{th}$ set of ALU input data values 158o and 160o that are stored in the $O^{th}$ set of input registers 134o and 136o, then ALU 140 performs the second ALU operation on the resultant value to an $O^{th}$ accumulated ALU sub-stream value that is stored in an $O^{th}$ accumulator 142o, and the resultant value is stored in the $O^{th}$ accumulator 142o. The cycle repeats for performing the first and second ALU operations on the next set of input data values 158a-158o and 160a-160o that replace the previous set of input data values stored in registers 134a-134o and 136a-136o, respectively, until the ALU stream has no more ALU instructions and corresponding set of input data values for processing by the $M^{th}$ pipeline processing system 112m. At that point, the first through $O^{th}$ accumulated ALU sub-stream values that are stored in the accumulators 142a-142o are added and stored in pipeline accumulation register 128m, and output as accumulated value 162m.

Referring to Fig. 1B, example system 100B is similar, if not identical, to example system 100A, except that each of the plurality of pipeline processing systems 112a'-112m' (corresponding to one of the plurality of pipeline processing systems 112a-112m of Fig. 1A) includes either a plurality of MAC-based processing engines 114a-114n that each includes a corresponding one of a plurality of MAC devices 116a-116n or a plurality of ALU-based processing engines 130a-130o that each includes a corresponding one of a plurality of ALU devices 132a-132o. Each of MAC devices 116a-116n includes a set (or pair) of input registers (one of input registers 118a/120a through 118n/120n), a multiplier (one of multipliers 122a-122n), an adder (one of adders 124a-124n), and an accumulator (one of accumulators 126a-126n). Each processing engine among the plurality of processing engines 114a-114n and/or corresponding one of the plurality of MAC devices 116a-116n is used to process MAC operations for one of the plurality of sub-streams. Similarly, each of ALU devices 132a-132o includes a set (or pair) of input registers (one of input registers 134a/136a through 134o/136o), ALUs (one of ALUs 138a-138o and one of ALUs 140a-140o), and an accumulator (one of accumulators 142a-142o). Each processing engine among the plurality of processing engines 114a-114n and/or corresponding one of the plurality of ALU devices 132a-132o is used to process ALU operations for one of the plurality of sub-streams. The functionalities of processor 102b and its components (as shown in Fig. 1B) are otherwise similar, if not identical, to those of processor 102a and its components (as shown in, and described above with respect to, Fig. 1A).

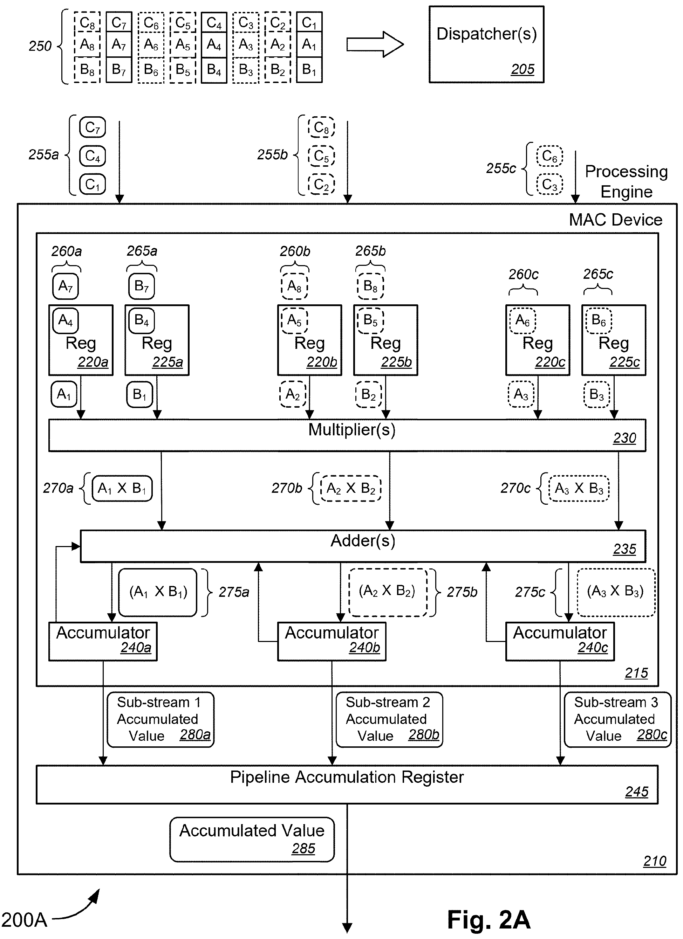

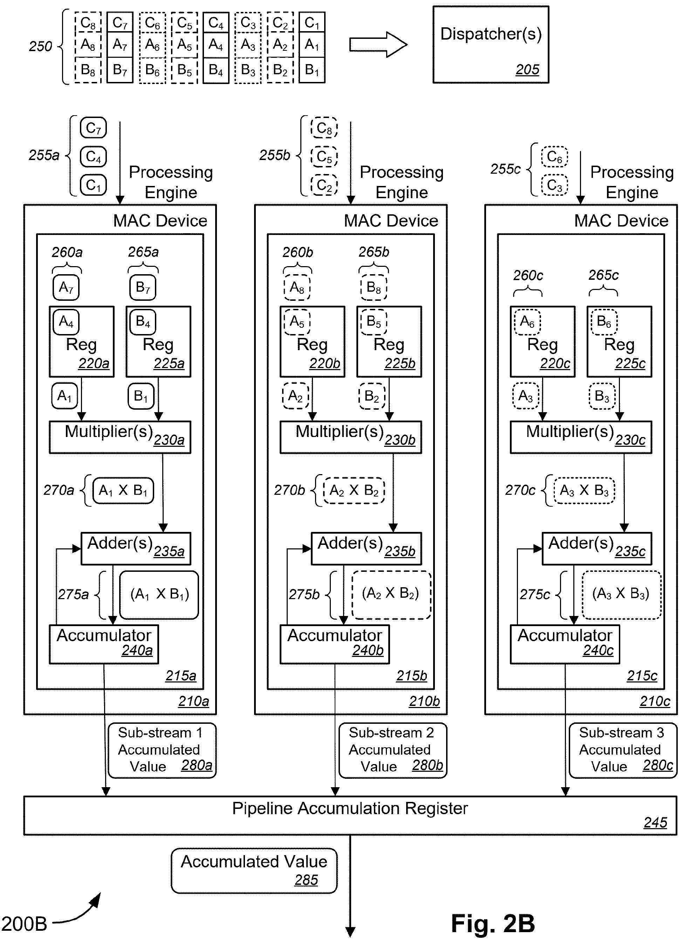

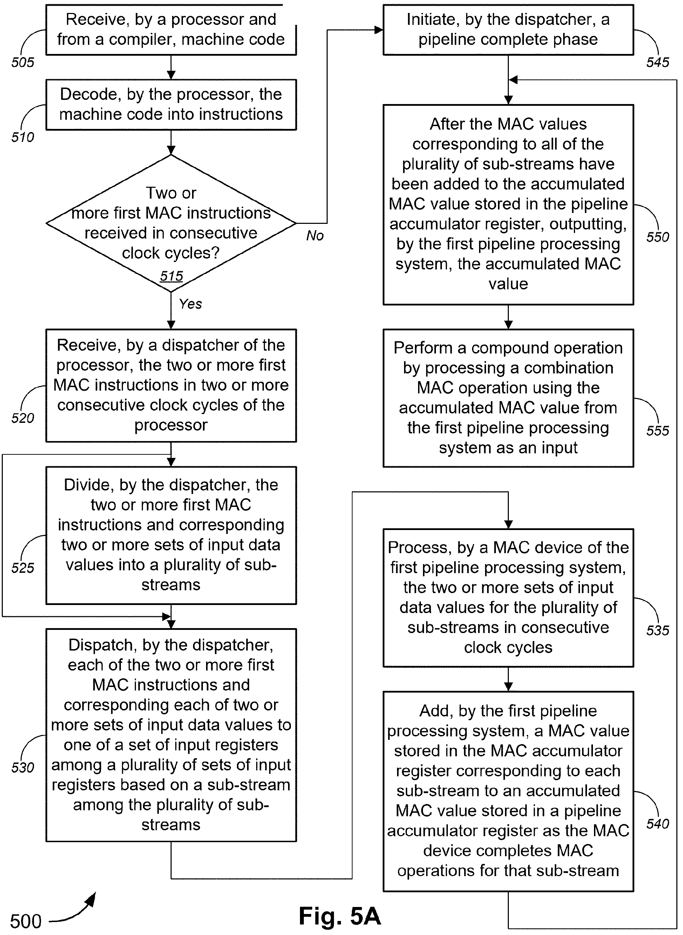

In operation, processor 102a, dispatcher(s) 108, processing engine(s) 114, 114a-114n, 130, or 130a-130o, and/or MAC device(s) 116 or 116a-116n or ALU device(s) 132 or 132a-132o may perform methods for implementing processor performance acceleration using hardware-enhanced multiply-accumulate streaming, as described in detail with respect to Figs. 2A-7. For example, example sequence flows 200A and 200B as described below with respect to Figs. 2A and 2B, example sequence flow 300 as described below with respect to Fig. 3, example pipelining diagram 400 as described below with respect to Fig. 4, and methods 500, 600, and 700 as described below with respect to Figs. 5A-5B, 6A-6B, and 7 may be applied with respect to the operations of system 100 of Fig. 1.

Figs. 2A and 2B depict example data flows 200A and 200B that are each managed by a dispatcher(s) 205 when implementing processor performance acceleration using hardware-enhanced multiply-accumulate streaming (also referred to herein as "sub-streaming" or "hardware streaming"). Example data flow 200A corresponds to processing of data using a pipeline processing system similar to the first pipeline processing system 112a of processor 102a of Fig. 1A, while example data flow 200B corresponds to processing of data using a pipeline processing system similar to the first pipeline processing system 112a' or processor 102b of Fig. 1B. In some embodiments, dispatcher(s) 205, processing engine(s) 210 or 210a-210c, MAC device(s) 215 or 215a-215c, input registers 220a-220c and 225a-225c, multiplier(s) 230 or 230a-230c, adder(s) 235 or 235a-235c, accumulators 240a-240c, pipeline accumulation register 245, input data 260a-260c and 265a-265c, and accumulated value 285 of Figs. 2A and 2B may be similar, if not identical, to the dispatcher(s) 108, processing engine(s) 114 or 114a-114n, MAC device(s) 116 or 116a-116n, input registers 118a-118n and 120a-120n, multiplier(s) 122 or 122a-122n, adder(s) 124 or 124a-124n, accumulators 126a-126n, pipeline accumulation register 128a, input data 154a-154n and 156a-156n, and accumulated value 162a, respectively, of system 100A or 100B of Fig. 1A or 1B, and the description of these components of system 100A or 100B of Fig. 1A or 1B are similarly applicable to the corresponding components of Figs. 2A and 2B.

In the example data flow 200A of Fig. 2A, dispatcher(s) 205 receives MAC stream 250, which includes instructions $C_1$-$C_8$ 255 (indicating MAC operations to be performed on the corresponding sets of input data values $A_1$-$A_8$ 260 and $B_1$-$B_8$ 265) and the corresponding sets of input data values $A_1$-$A_8$ 260 and $B_1$-$B_8$ 265. The input data values $A_1$-$A_8$ 260 and $B_1$-$B_8$ 265 are either scalar data values or vector data values. The dispatcher(s) 205 divides the MAC stream 250 into a plurality of sub-streams, in this case, three sub-streams. In some examples, the MAC device 215 includes a SIMD engine having a width corresponding to a number of concurrent MAC operations that can be processed at a time. In examples, a width of the SIMD engine is one of 2, 4, 8, 16, 32, 64, 128 bits or greater. In some instances, the input registers 220a-220c and 225a-225c likewise have register widths corresponding to the SIMD width. In examples, dividing the MAC stream 250 into a plurality of sub-streams is based on at least one of:

(a) a MAC operational latency in terms of a number of clock cycles of the processor that is used to complete a single MAC operation among the two or more first MAC operations (in this case, three clock cycles);
(b) the SIMD width; and/or
(c) any dependencies identified within the MAC operations indicated in the instructions $C_1$-$C_8$ 255, with dependent MAC operations being dispatched to the same sub-stream.

The dispatcher(s) 205 dispatches the MAC instructions $C_1$-$C_8$ 255 and the corresponding sets of input data values $A_1$-$A_8$ 255 and $B_1$-$B_8$ 260 into corresponding ones of the sub-streams. In this case, the MAC instructions $C_1$, $C_4$, and $C_7$ (collectively, "instructions 255a") and the corresponding sets of input data values $A_1$, $A_4$, and $A_7$ (collectively, "input data values 260a") and $B_1$, $B_4$, and $B_7$ (collectively, "input data values 265a") are dispatched to Sub-stream 1, with input data values 260a being dispatched to input register 220a and with input data values 265a being dispatched to input register 225a. The MAC instructions $C_2$, $C_5$, and $C_8$ (collectively, "instructions 255b") and the corresponding sets of input data values $A_2$, $A_5$, and $A_8$ (collectively, "input data values 260b") and $B_2$, $B_5$, and $B_8$ (collectively, "input data values 265b") are dispatched to Sub-stream 2, with input data values 260b being dispatched to input register 220b and with input data values 265b being dispatched to input register 225b. The MAC instructions $C_3$ and $C_6$ (collectively, "instructions 255c") and the corresponding sets of input data values $A_3$ and $A_6$ (collectively, "input data values 260c") and $B_3$ and $B_6$ (collectively, "input data values 265c") are dispatched to Sub-stream 3, with input data values 260c being dispatched to input register 220c and with input data values 265c being dispatched to input register 225c.

In a first clock cycle, multiplier(s) 230 multiplies the first set of MAC input data values 260a and 265a (in this case, $A_1$ and $B_1$) that are stored in the first set of input registers 220a and 225a, to produce a set of resultant product values 270a (in this case, values corresponding to $A_1 \times B_1$). As input values $A_1$ and $B_1$ are used by the multiplier(s) 230, the next input values $A_4$ and $B_4$ for Sub-stream 1 are stored in the first set of input registers 220a and 225a, replacing $A_1$ and $B_1$. Adder(s) 235 subsequently adds the set of resultant product values 270a to a first accumulated MAC sub-stream value that is stored in a first accumulator 240a (in this case, as this is the beginning of Sub-stream 1, the first accumulator 240a is empty and a null or zero value is added), and the resultant sum value 275a (in this case, a value corresponding to $(A_1 \times B_1)$) is stored in the first accumulator 240a.

In a second clock cycle, the multiplier(s) 230 multiplies the second set of MAC input data values 260b and 265b (in this case, $A_2$ and $B_2$) that are stored in the second set of input registers 220b and 225b, to produce a set of resultant product values 270b (in this case, values corresponding to $A_2 \times B_2$). As input values $A_2$ and $B_2$ are used by the multiplier(s) 230, the next input values $A_5$ and $B_5$ for Sub-stream 2 are stored in the second set of input registers 220b and 225b, replacing $A_2$ and $B_2$. The adder(s) 235 subsequently adds the set of resultant product values 270b to a second accumulated MAC sub-stream value that is stored in a second accumulator 240b (in this case, as this is the beginning of Sub-stream 2, the second accumulator 240b is empty and a null or zero value is added), and the resultant sum value 275b (in this case, a value corresponding to $(A_2 \times B_2)$) is stored in the second accumulator 240b.

In a third clock cycle, the multiplier(s) 230 multiplies the third set of MAC input data values 260c and 265c (in this case, $A_3$ and $B_3$) that are stored in the third set of input registers 220c and 225c, to produce a set of resultant product values 270c (in this case, values corresponding to $A_3 \times B_3$). As input values $A_3$ and $B_3$ are used by the multiplier(s) 230, the next input values $A_6$ and $B_6$ for Sub-stream 3 are stored in the third set of input registers 220c and 225c, replacing $A_3$ and $B_3$. The adder(s) 235 subsequently adds the set of resultant product values 270c to a third accumulated MAC sub-stream value that is stored in a third accumulator 240c (in this case, as this is the beginning of for Sub-stream 3, the third accumulator 240c is empty and a null or zero value is added), and the resultant sum value 275c (in this case, a value corresponding to $(A_3 \times B_3)$) is stored in the third accumulator 240c.

In a fourth clock cycle, the multiplier(s) 230 multiplies the fourth set of MAC input data values 260a and 265a (in this case, $A_4$ and $B_4$) that are stored in the first set of input registers 220a and 225a, to produce a set of resultant product values 270a (in this case, values corresponding to $A_4 \times B_4$). As input values $A_4$ and $B_4$ are used by the multiplier(s) 230, the next input values $A_7$ and $B_7$ for Sub-stream 1 are stored in the first set of input registers 220a and 225a, replacing $A_4$ and $B_4$. The adder(s) 235 subsequently adds the set of resultant product values 270a to the first accumulated MAC sub-stream value that is stored in the first accumulator 240a (in this case, a value corresponding to $(A_1 \times B_1)$), and the resultant sum value 275a (in this case, a value corresponding to $(A_1 \times B_1) + (A_4 \times B_4)$) is stored in the first accumulator 240a.

In a fifth clock cycle, the multiplier(s) 230 multiplies the fifth set of MAC input data values 260b and 265b (in this case, $A_5$ and $B_5$) that are stored in the second set of input registers 220b and 225b, to produce a set of resultant product values 270b (in this case, values corresponding to $A_5 \times B_5$). As input values $A_5$ and $B_5$ are used by the multiplier(s) 230, the next input values $A_8$ and $B_8$ for Sub-stream 2 are stored in the second set of input registers 220b and 225b, replacing $A_5$ and $B_5$. The adder(s) 235 subsequently adds the set of resultant product values 270b to the second accumulated MAC sub-stream value that is stored in the second accumulator 240b (in this case, a value corresponding to $(A_2 \times B_2)$), and the resultant sum value 275b (in this case, a value corresponding to $(A_2 \times B_2) + (A_5 \times B_5)$) is stored in the second accumulator 240b.

In a sixth clock cycle, the multiplier(s) 230 multiplies the sixth set of MAC input data values 260c and 265c (in this case, $A_6$ and $B_6$) that are stored in the third set of input registers 220c and 225c, to produce a set of resultant product values 270c (in this case, values corresponding to $A_6 \times B_6$). As input values $A_6$ and $B_6$ are used by the multiplier(s) 230, the next input values for Sub-stream 3 would be stored in the third set of input registers 220c and 225c. In this case, however, MAC stream 250 had no more MAC instructions and corresponding sets of input data values (where either a pipeline bubble was encountered by the dispatcher(s) 205 or MAC instructions for a different pipeline processing system was received by the dispatcher(s) 205), which triggers a pipeline complete phase, as described in detail below. In an example, a null or zero value may replace the input values $A_6$ and $B_6$. The adder(s) 235 subsequently adds the set of resultant product values 270c to the third accumulated MAC sub-stream value that is stored in the third accumulator 240c (in this case, a value corresponding to $(A_3 \times B_3)$), and the resultant sum value 275c (in this case, a value corresponding to $(A_3 \times B_3) + (A_6 \times B_6)$) is stored in the third accumulator 240c.

In a seventh clock cycle, the multiplier(s) 230 multiplies the seventh set of MAC input data values 260a and 265a (in this case, $A_7$ and $B_7$) that are stored in the first set of input registers 220a and 225a, to produce a set of resultant product values 270a (in this case, values corresponding to $A_7 \times B_7$). As input values $A_7$ and $B_7$ are used by the multiplier(s) 230, the next input values for Sub-stream 1 would be stored in the first set of input registers 220a and 225a. Here, MAC stream 250 had no more MAC instructions and corresponding sets of input data values, and thus, similar to the sixth clock cycle, a null or zero value may replace the input values $A_7$ and $B_7$. The adder(s) 235 subsequently adds the set of resultant product values 270a to a first accumulated MAC sub-stream value that is stored in the first accumulator 240a (in this case, a value corresponding to $(A_1 \times B_1) + (A_4 \times B_4)$), and the resultant sum value 275a (in this case, a value corresponding to $(A_1 \times B_1) + (A_4 \times B_4) + (A_7 \times B_7)$) is stored in the first accumulator 240a.

In an eighth clock cycle, the multiplier(s) 230 multiplies the second set of MAC input data values 260b and 265b (in this case, $A_8$ and $B_8$) that are stored in the second set of input registers 220b and 225b, to produce a set of resultant product values 270b (in this case, values corresponding to $A_8 \times B_8$). As input values $A_8$ and $B_8$ are used by the multiplier(s) 230, the next input values for Sub-stream 2 would be stored in the second set of input registers 220b and 225b. Here, MAC stream 250 had no more MAC instructions and corresponding sets of input data values, and thus, similar to the sixth and seventh clock cycles, a null or zero value may replace the input values $A_8$ and $B_8$. The adder(s) 235 subsequently adds the set of resultant product values 270b to a second accumulated MAC sub-stream value that is stored in a second accumulator 240b (in this case, a value corresponding to $(A_2 \times B_2) + (A_5 \times B_5)$), and the resultant sum value 275b (in this case, a value corresponding to $(A_2 \times B_2) + (A_5 \times B_5) + (A_8 \times B_8)$) is stored in the second accumulator 240b.

When the pipeline complete phase is initiated or triggered by the dispatcher(s) 205, the dispatcher(s) 205 directs subsequent MAC instructions that are received by the dispatcher(s) 205 away from the pipeline processing system and toward other pipeline processing systems. After all the input data values 260a and 265a have been processed by the multiplier(s) 230 and the adder(s) 235 for Sub-stream 1, the MAC value that is stored in the first accumulator 240a (in this case, the Sub-stream 1 accumulated value 280a corresponding to $(A_1 \times B_1) + (A_4 \times B_4) + (A_7 \times B_7)$) is added to an accumulated MAC value that is stored in the pipeline accumulation register 245. Likewise, after all the input data values 260b and 265b have been processed by the multiplier(s) 230 and the adder(s) 235 for Sub-stream 2, the MAC value that is stored in the second accumulator 240b (in this case, the Sub-stream 2 accumulated value 280b corresponding to $(A_2 \times B_2) + (A_5 \times B_5) + (A_8 \times B_8)$) is added to the accumulated MAC value that is stored in the pipeline accumulation register 245. Similarly, after all the input data values 260c and 265c have been processed by the multiplier(s) 230 and the adder(s) 235 for Sub-stream 3, the MAC value that is stored in the third accumulator 240c (in this case, the Sub-stream 3 accumulated value 280c corresponding to $(A_3 \times B_3) + (A_6 \times B_6)$) is added to the accumulated MAC value that is stored in the pipeline accumulation register 245. After the MAC values corresponding to all of the plurality of sub-streams (in this case, Sub-streams 1, 2, and 3) have been added to the accumulated MAC value stored in the pipeline accumulation register 245, the processing engine of the pipeline processing system outputs the accumulated MAC value 285 (in this case, a value corresponding to $[(A_1 \times B_1) + (A_4 \times B_4) + (A_7 \times B_7)] + [(A_2 \times B_2) + (A_5 \times B_5) + (A_5 \times B_8)] + [(A_3 \times B_3) + (A_6 \times B_6)]$).

Although Fig. 2A is described with respect to each sub-stream being processed in consecutive clock cycles, in some examples, using a SIMD engine having a width corresponding to the MAC latency (in this case, three clock cycles), the three sub-streams may be processed in one clock cycle. That is, the processes as described above with respect to the first, second, and third clock cycles would occur in one clock cycle, while the processes with respect to the fourth, fifth, and sixth clock cycles would occur in the next clock cycle, and the processes with respect to the seventh and eighth clock cycles would occur in the clock cycle after that, with the pipeline accumulation process occurring in the subsequent clock cycle.

Referring to Fig. 2B, example data flow 200B is similar, if not identical, to example data flow 200A, except that rather than a single processing engine 210 and corresponding single MAC device 215 with its single set of multipliers 230 and its single set of adders 235, as shown and described above with respect to Fig. 2A, example data flow 200B utilizes a plurality of processing engines 210a-210c, each with a corresponding one of a plurality of MAC devices 215a-215c. Each MAC device includes a corresponding one of a plurality of sets of multipliers 230a-230c and a corresponding one of a plurality of sets of adders 235a-235c. The plurality of input registers 220a-220c and 225a-225c as well as the plurality of accumulators 240a-240c are spread across each of the processing engines 210a-210c (and corresponding MAC devices 215a-215c), as shown in Fig. 2B. The functionalities of dispatcher(s) 205, processing engines 210a-210c, MAC devices 215a-215c, input registers 220a-220c and 225a-225c, multipliers 230a-230c, adders 235a-235c, accumulators 240a-240c, and pipeline accumulation register 245 (as shown in Fig. 2B) are otherwise similar, if not identical, to those of dispatcher(s) 205, processing engine 210, MAC device 215, input registers 220a-220c and 225a-225c, multiplier(s) 230, adder(s) 235, accumulators 240a-240c, and pipeline accumulation register 245 (as shown in, and described above with respect to, Fig. 2A). Figs. 2A and 2B are provided as simple examples for conveying the general functionalities of the present technology. In practice, the MAC stream 250 would include a much larger number of MAC instructions, and the SIMD engine (and corresponding hardware components, such as the MAC device and registers) would have a larger width, as described below.

With reference to Figs. 1A, 1B, 2A, and 2B as described above, in an example, the MAC device(s) (e.g., MAC device(s) 116, 116a-116n, 215, and/or 215a-215c), the MAC stream(s) (e.g., MAC stream 250), the MAC instruction(s) (e.g., MAC instructions 255a-255c), the MAC operation(s), the MAC value(s) (e.g., MAC input data values 154a-154n, 156a-156n, 260a-260c, and/or 265a-265c, and/or MAC values 270a-270c and/or 275a-275c), the accumulated MAC value(s) (e.g., sub-stream accumulated values 280a-280c, and/or accumulated values 162a and/or 285), and the associated MAC hardware refer to a scalar MAC device(s), a scalar MAC instruction(s), a scalar MAC operation(s), a scalar MAC value(s), an accumulated scalar MAC value(s), and associated scalar MAC hardware, respectively. In other examples, the MAC device(s), the MAC stream(s), the MAC instruction(s), the MAC operation(s), the MAC value(s), the accumulated MAC value(s), and associated MAC hardware refer to a VMAC device(s), a VMAC stream(s), a VMAC instruction(s), a VMAC operation(s), a VMAC value(s), an accumulated VMAC value(s), and associated VMAC hardware, respectively.

In some aspects, AI/ML tasks that heavily employ MAC operations, such as within LLMs (like Generative Pre-trained Transformer "GPT"), may apply such MAC operations on processes such as SoftMax and various normalization methods (e.g., Layer, Batch, or Group). For example, SoftMax is calculated using the following equation:

$$SoftMax\ (y_i) = \frac{e^{y_i}}{\sum_{j=1}^{K} e^{y_j}}, \qquad \text{(Eqn. 1)}$$

where $i$ = 1, ..., $K$, and $y = (y_1, \ldots, y_K) \in \mathbb{R}^K$. In examples, LayerNorm is calculated using the following equation:

$$LayerNorm\ (y_i) = \frac{y_i - mean}{Standard\ Deviation}, \qquad \text{(Eqn. 2)}$$

$$Standard\ Deviation\ = \sqrt{\left(\frac{1}{N}\sum_{i=1}^{N}(y_i\ -\ mean)^2\right)}, \qquad \text{(Eqn. 3)}$$

$$Mean = \frac{\sum_{j=1}^{K} y_j}{K}. \qquad \text{(Eqn. 4)}$$

For each of these equations, it is necessary to calculate the sum components, the mean components, etc., before processing the other portions of each equation (e.g., the squaring components, the square root components, and the standard deviation components). In the case that there is a large number of terms to be summed (e.g., where $K$ is a large number, such as a value in the thousands or tens of thousands, or more), many clock cycles are needed to process the overall equation.

In an example, where an LLM has a token size of 2,048, a mean value would accumulate as $1/2,048 \times (y_0 + y_1 + \ldots + y_{2,047})$. As LLMs support larger token counts, the scale of accumulation increases exponentially. Using a vector processor with a SIMD width of 32 and a token size of 2,048 for an average MAC calculation, it would take 64 VMAC instructions (e.g., 2,048/32 = 64). Allowing for 20 extra cycles to reduce a 32-element vector to a single sum and with each VMAC instruction taking 3 clock cycles, the entire mean operation for 2,048 elements requires 212 cycles (e.g., $64 \times 3 + 20 = 212$). Without the logic of the state machine dividing the VMAC operations into sub-streams for consecutive clock cycle processing (as described in detail above with respect to Figs. 1A, 1B, 2A, and 2B), the output would feed into the next operation in a sequential manner, particularly where dispatchers of conventional superscalar vector processors managing read-after-write ("RAW") data hazards by separating dependent VMAC instructions. In another example, with a 48,000 token LLM (which corresponds to $48,000 \times 1.024 = 49,152$), the mean value would accumulate as $1/49,152 \times (y_0 + y_1 + \ldots + y_{49,151})$. The cycle count would increase to 4,628 (e.g., $49,152 \div 32 \times 3 + 20 = 4,628$) to compute the mean value. In another example, without the logic of the state machine dividing the VMAC operations into sub-streams for consecutive clock cycle processing, the sequential process would look like the following, where VMAC VA0 corresponds to a vector accumulator (e.g., a 32-bit floating point register), while each of V1 and V2 corresponds to an input vector register (e.g., a 16-bit floating point register):

Cycle 1: VMAC VA0, V1, V2 # computes y0 * (1/2,048) + 0 = Accumulated Result
Cycle 2: Bubble
Cycle 3: Bubble
Cycle 4: VMAC VA0, V1, V2 # computes y32 * (1/2,048) + Accumulated Result = Accumulated Result
Cycle 5: Bubble
Cycle 6: Bubble
Cycle 7: VMAC VA0, V1, V2 # computes y64 * (1/2,048) + Accumulated Result = Accumulated Result
Cycle 8: Bubble
Cycle 9: Bubble ...

In other words, without sub-streaming, a single VMAC operating on a stream of 32 elements computes: $1/2{,}048 \times (y_0 + y_{32} + y_{64} + ... + y_{2{,}016})$. On the other hand, with sub-streaming or hardware streaming (as described above with respect to Figs. 1A, 1B, 2A, and 2B), the following process would result:

Sub-stream 1 processes: $1/2{,}048 \times (y_0 + y_{96} + y_{192} + ... + y_{2{,}016})$
Sub-stream 1 processes: $1/2{,}048 \times (y_{32} + y_{128} + y_{224} + ... + y_{1{,}952})$
Sub-stream 1 processes: $1/2{,}048 \times (y_{64} + y_{160} + y_{256} + ... + y_{1{,}984})$

$$\text{Result} = \text{Sub-stream } 1 + \text{Sub-stream } 2 + \text{Sub-stream } 3$$

In this manner, latency resulting in bubbles can be avoided, and the superscalar dispatcher manages the dispatch of VMAC instructions as follows:

Cycle 1: VMAC VA0, V1, V2 # computes y0 * (1/2,048) + 0 = Sub-stream 1 Accumulated Result
Cycle 2: VMAC VA0, V1, V2 # computes y32 * (1/2,048) + 0 = Sub-stream 2 Accumulated Result
Cycle 3: VMAC VA0, V1, V2 # computes y64 * (1/2,048) + 0 = Sub-stream 3 Accumulated Result
Cycle 4: VMAC VA0, V1, V2 # computes y96 * (1/2,048) + Sub-stream 1 Accumulated Result = Sub-stream 1 Accumulated Result
Cycle 5: VMAC VA0, V1, V2 # computes y128 * (1/2,048) + Sub-stream 2 Accumulated Result = Sub-stream 2 Accumulated Result
Cycle 6: VMAC VA0, V1, V2 # computes y160 * (1/2,048) + Sub-stream 3 Accumulated Result = Sub-stream 3 Accumulated Result ...

When utilizing hardware streaming, calculating the mean in a 2,048 token LLM takes 84 cycles (e.g., $2{,}048 \div 32 + 20 = 84$), while it takes 1,556 cycles for a 48,000 token LLM (e.g., $48{,}000 \times 1.024 \div 32 + 20 = 1{,}556$). Performance is generally improved by approximately Ntimes, where N is the latency of the MAC hardware. Enabling hardware streaming yields about a 50 % performance boost for SoftMax, for instance.

Fig. 3 depicts an example sequence flow 300 representing a state machine for controlling VMAC streaming when implementing processor performance acceleration using hardware-enhanced multiply-accumulate streaming. Although the state machine of Fig. 3 is described with respect to VMAC streams, instructions, and/or operations, the state machine is also applicable to MAC streams, instructions, and/or operations, or to ALU streams, instructions, and/or operations.

With reference to Fig. 3, at operation 305, when a dispatcher(s) (e.g., dispatcher(s) 108 or 205 of Figs. 1A-1B or 2A-2B) receives a second VMAC instruction within 2 cycles or clock cycles directed to the same pipe, pipeline, or pipeline processing system (e.g., one of pipeline processing systems 112a-112m or 112a'-112m' of Figs. 1A or 1B), the dispatcher(s) starts a stream (at operation 310), at a first cycle 315. However, when no VMAC instruction is received within 2 cycles, or when VMAC instructions are received within 2 cycles directed to different pipes, pipelines, or pipeline processing systems (at operation 320), the dispatcher(s) initiates or triggers a pipeline complete phase (at operation 345). After the stream has started (at operation 310), when the dispatcher(s) receives a third VMAC instruction within 3 cycles directed to the same pipe, pipeline, or pipeline processing system (at operation 325), the dispatcher(s) continues the stream (at operation 330), which is sustained for each VMAC received in the next clock cycle directed to the same pipe, pipeline, or pipeline processing system (at operation(s) 335). When the dispatcher(s) receives a VMAC instruction in the next cycle directed to a different pipe, pipeline, or pipeline processing system or when no VMAC instruction is received in the next cycle (at operation 340), the dispatcher(s) initiates or triggers a pipeline complete phase (at operation 345). With the pipeline complete phase initiated or triggered, VMAC instructions within the stream are allowed to continue being processed to completion (which may take 1-5 cycles or more to complete (at operation 350)), while subsequent VMAC instructions are directed to other pipes, pipelines, or pipeline processing systems. After process completion of the VMAC instructions in the stream, the next cycle 355 leads to an idle state 360 until two VMAC instructions are received within 2 cycles or clock cycles directed to the same pipe, pipeline, or pipeline processing system.

Fig. 4 depicts an example pipelining diagram 400 that corresponds to implementation of processor performance acceleration using hardware-enhanced multiply-accumulate streaming. In Fig. 4, each vertical stack of blocks represents one cycle (or clock cycle) of operation. As data and/or instructions are received from the left, with each subsequent cycle, the data and/or instructions proceed to a block on the right in one of the rows, which represents the pipes, including a common scalar and vector pipe 405, a vector store pipe 410, a vector load pipe 415, and a vector pipe 420. The dispatcher(s) 430a or 430b dispatches the data and/or instructions to one of the pipes and/or one of the execution processors in one of the pipes. At the appropriate cycle, the execution processor, to which the data and/or instructions have been dispatched, processes the data and/or instructions within the appropriate cycle.

The common scalar and vector pipe 405 includes an instruction tag access ("ITA") block 422, an instruction data multiplexer ("IDM") block 424, an instruction branch prediction 0 ("IBP0") block 426, an instruction branch prediction 1 ("IBP1") and/or instruction queue write ("IQW") block 428, one or more dispatch blocks 430, one or more scalar register file ("RF") read blocks 432, one or more scalar execution blocks 434, and a scalar RF write ("SRW") block 436. In examples, the one or more dispatch blocks 430 include a dispatch 0 ("DIS0") block 430a and a dispatch 1 ("DIS1") block 430b. In some examples, the one or more scalar RF read blocks 432 include a scalar RF read 0 ("SR0") block 432a and a scalar RF read 1 ("SR1") block 432b. In some instances, the one or more scalar execution blocks 434 includes a scalar execution 0 ("SX0") block 434a, a scalar execution 1 ("SX1") block 434b, a scalar execution 2 ("SX2") block 434c, and a scalar execution 3 ("SX3") block 434d.

The vector store pipe 410 includes a store queue push ("SQP") block 438, a plurality of blank blocks 440, a store queue address ("SQA") block 442, a store queue scalar data ("SQSD") block 444, a store queue scalar pop ("SQSP") 446, a store queue vector data ("SQVD") block 448, and a store queue vector pop ("SQVP") 450. In some cases, the plurality of blank blocks 440 includes blank blocks 440a-440s, each representing a cycle during which no operations are performed in that pipe.

The vector load pipe 415 includes one or more load address arbitration blocks 452, a load address flight ("LAF") block 454, one or more data static random access memory ("SRAM") read blocks 456, a load data flight ("LDF") block 458, and an SRW block 460. In examples, the one or more load address arbitration blocks 452 include a load address arbitration 0 ("LAA0") blocks 452a and a load address arbitration 1 ("LAA1") blocks 452b. In some examples, the one or more data SRAM read blocks 456 include a data SRAM read 0 ("DR0") block 456a, a data SRAM read 1 ("DR1") block 456b, a data SRAM read 2 ("DR2") block 456c, a data SRAM read 3 ("DR3") block 456d, a data SRAM read 4 ("DR4") block 456e, a data SRAM read 5 ("DR5") block 456f, a data SRAM read 6 ("DR6") block 456g, a data SRAM read 7 ("DR7") block 456h, a data SRAM read 8 ("DR8") block 456i, and a data SRAM read 9 ("DR9") block 456j.

The vector pipe 420 includes a vector RF read 0 ("VR0") block 462, a vector RF read 1 ("VR1") and/or vector data bypass 0 ("VDB0") and/or SRW block 464, a vector data bypass 1 ("VDB1") block 466, one or more vector execution blocks 468, and a vector RF write ("VRW") block 470. In examples, the one or more vector execution blocks 468 include a vector execution block 0 ("VX0") 468a, a vector execution block 1 ("VX1") 468b, a vector execution block 2 ("VX2") 468c, a vector execution block 3 ("VX3") 468d, and a vector execution block 4 ("VX4") 468e.

The ITA block 422, the IDM block 424, the IBP0 block 426, and the IBP1/IQW block 428 in the common scalar and vector pipe 405 receive and pre-process MAC or ALU instructions, prior to the one or more dispatch blocks 430a-430b dispatching the MAC or ALU instructions to the one or more scalar execution blocks 434a-434d in the common scalar and vector pipe 405 and/or to the one or more vector execution blocks 468a-468e in the vector pipe 420. In examples, the one or more dispatch blocks 430a-430b dispatches the MAC or ALU instructions based at least in part on logic in a state machine, such as the state machine represented in Fig. 3. In some examples, a duplicate state machine is provided to the vector pipe and/or to the one or more vector execution blocks 468a-468e in particular. In this manner, after the one or more dispatch blocks 430a-430b dispatch the MAC or ALU instructions, the one or more dispatch blocks 430a-430b need not follow-up with subsequent operations, while the vector pipe 420 and/or the one or more vector execution blocks 468a-468e are able to follow the logic of the state machine to perform follow-up operations on values produced for previous operations processed by the one or more vector execution blocks 468a-468e. The scalar RF read blocks 432a-432b retrieve, access, or read data from the input register(s) prior to the scalar execution blocks 434a-434d performing scalar MAC or ALU operations on the data, while the SRW block 436 writes or stores results of the scalar MAC or ALU operations in other registers (e.g., accumulation registers). Similarly, the vector RF read blocks 462-464 retrieve, access, or read data from the input register(s) prior to the vector execution blocks 468a-468e performing vector MAC or ALU operations on the data, while the VRW block 470 writes or stores results of the vector MAC or ALU operations in other registers (e.g., accumulation registers).

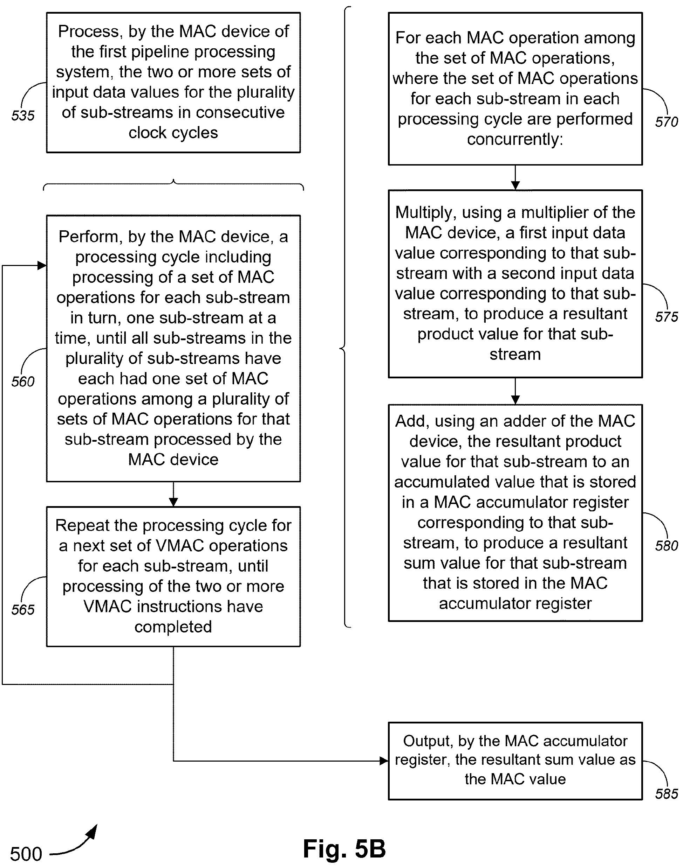

Figs. 5A and 5B depict an example method 500 for implementing processor performance acceleration using hardware-enhanced multiply-accumulate streaming. In examples, the operations of example method 500 may be performed by a processor (e.g., processor 102a of Fig. 1A), a dispatcher(s) (e.g., dispatcher(s) 108, 205, or 430a-430b of Figs. 1A, 2A, or 4), a processing engine (e.g., processing engine 114 or 210 of Figs. 1A or 2A), and/or a MAC device (e.g., MAC device 116 or 215 of Figs. 1A or 2A).

In the example method 500 of Fig. 5A, at operation 505, a processor receives machine code from a compiler. In examples, the compiler is either disposed on the processor, such as shown in the example systems 100A and 100B (e.g., compiler 104 of Figs. 1A and 1B) or disposed external to the processor. The processor decodes the machine code into one or more instructions (at operation 510), in some cases, using a decoder (e.g., decoder 106 of Figs. 1A and 1B). At operation 515, a dispatcher of the processor receives the one or more instructions and determines whether two or more first MAC instructions directed to a first pipeline processing system have been received in consecutive clock cycles of the processor. Based on a determination that two or more first MAC instructions have been received in consecutive clock cycles, method 500 continues onto the process at operation 520. Based on a determination that two or more first MAC instructions have not been received in consecutive clock cycles (e.g., either receiving a pipeline bubble corresponding to an absence of a MAC instruction or receiving a second MAC instruction directed to a second pipeline processing system), method 500 continues onto the process at operation 545.

At operation 520, the dispatcher receives the two or more first MAC instructions directed to the first pipeline processing system in two or more consecutive clock cycles of the processor. Method 500 either continues onto the process at operation 525 or continues onto the process at operation 530. At operation 525, the dispatcher divides the two or more first MAC instructions and corresponding two or more sets of input data values into a plurality of sub-streams, based at least on a MAC operational latency in terms of a number of clock cycles of the processor that is used to complete a single MAC operation among the two or more first MAC operations. In the case that a MAC device of a processing engine of the first pipeline processing system that is used to process the two or more first MAC instructions and the corresponding two or more sets of input data values includes a SIMD engine having a width corresponding to a number of concurrent MAC operations that can be processed at a time, dividing the two or more first MAC instructions and the corresponding two or more sets of input data values (at operation 525) is further based on the width of the SIMD. In the case that dependencies are identified within any of the two or more first MAC operations, dividing the two or more first MAC instructions and the corresponding two or more sets of input data values (at operation 525) is further based on the dependencies identified within the first MAC operations among the two or more first MAC operations, with dependent first MAC operations being dispatched to the same sub-stream. In examples in which the process at operation 525 is skipped, either the division into the plurality of sub-streams had previously already occurred or division into the plurality of sub-streams is an integrated part of the dispatching process of operation 530. In some instances, default divisioning may be implemented. For example, where a MAC operational latency is known for particular MAC operations being processed, the dispatcher may be configurable or re-configurable to automatically divide into a pre-determined number of sub-streams and to dispatch accordingly (in some cases, in an integrated dispatch step (such as the process at operation 530)).

At operation 530, the dispatcher dispatches each of the two or more first MAC instructions and corresponding each of two or more sets of input data values to one of a set of input registers among a plurality of sets of input registers based on a sub-stream among the plurality of sub-streams. In examples, a number of sets of the plurality of sets of input registers corresponds to a number of sub-streams for processing the two or more first MAC instructions. At operation 535, the MAC device processes the two or more sets of input data values for the plurality of sub-streams in consecutive clock cycles (an example of which is shown and described below with respect to Fig. 5B). An output value from the MAC device corresponding to each sub-stream is stored in a MAC accumulator register for that sub-stream, among a plurality of MAC accumulators corresponding to the plurality of sub-streams. At operation 540, the first pipeline processing system adds a MAC value stored in the MAC accumulator register corresponding to each sub-stream to an accumulated MAC value stored in a pipeline accumulator register as the MAC device completes MAC operations for that sub-stream. Method 500 continues onto the process at operation 550.

At operation 545, in response to receiving, in a clock cycle following receipt of the two or more first MAC instructions, one of a pipeline bubble corresponding to an absence of a MAC instruction or a second MAC instruction directed to the second pipeline processing system, the dispatcher initiates a pipeline complete phase in which subsequent MAC instructions that are received by the dispatcher are directed away from the first pipeline processing system. At operation 550, after the MAC values corresponding to all of the plurality of sub-streams have been added to the accumulated MAC value stored in the pipeline accumulator register, the first pipeline processing system outputs the accumulated MAC value. At operation 555, the processor performs a compound operation by processing a combination MAC operation using the accumulated MAC value from the first pipeline processing system as one of two or more inputs for the combination MAC operation. In some examples, each of the two or more MAC operations includes one of a multiplication operation, a division operation, a sum operation, a subtraction operation, a squaring operation, or an inverse operation. In examples, the combination MAC operation includes one of a mean operation, a variance operation, a standard deviation operation, a square root operation, a SoftMax operation, or a LayerNorm operation.

Referring to Fig. 5B, in some examples, processing the two or more sets of input data values for the plurality of sub-streams in consecutive clock cycles (at operation 535) includes the MAC device performing a processing cycle including processing of a set of MAC operations for each sub-stream in turn, one sub-stream at a time, until all sub-streams in the plurality of sub-streams have each had one set of MAC operations among a plurality of sets of MAC operations for that sub-stream processed by the MAC device. At operation 565, the MAC device repeats the processing cycle (at operation 560) for a next set of MAC operations for each sub-stream, until processing of the two or more MAC instructions have completed. In examples, processing of the set of MAC operations for each sub-stream in each processing cycle (at operation 560) includes, for each MAC operation among the set of MAC operations, where the set of MAC operations for each sub-stream in each processing cycle are performed concurrently (at operation 570):

(1) a multiplier of the MAC device multiplies a first input data value (e.g., from the first input register) corresponding to that sub-stream with a second input data value (e.g., from the second input register) corresponding to that sub-stream, to produce a resultant product value for that sub-stream (at operation 575); and
(2) an adder of the MAC device adds the resultant product value for that sub-stream to an accumulated value that is stored in the MAC accumulator register corresponding to that sub-stream, to produce a resultant sum value for that sub-stream that is stored in the MAC accumulator register (at operation 580).

Fig. 2A depicts the process described at operations 570-580. At operation 585, after the plurality of sets of MAC operations for each sub-stream have been processed, the MAC accumulator register for that sub-stream outputs the resultant sum value as the MAC value for that sub-stream, the MAC value being added to the accumulated MAC value (at operation 540).

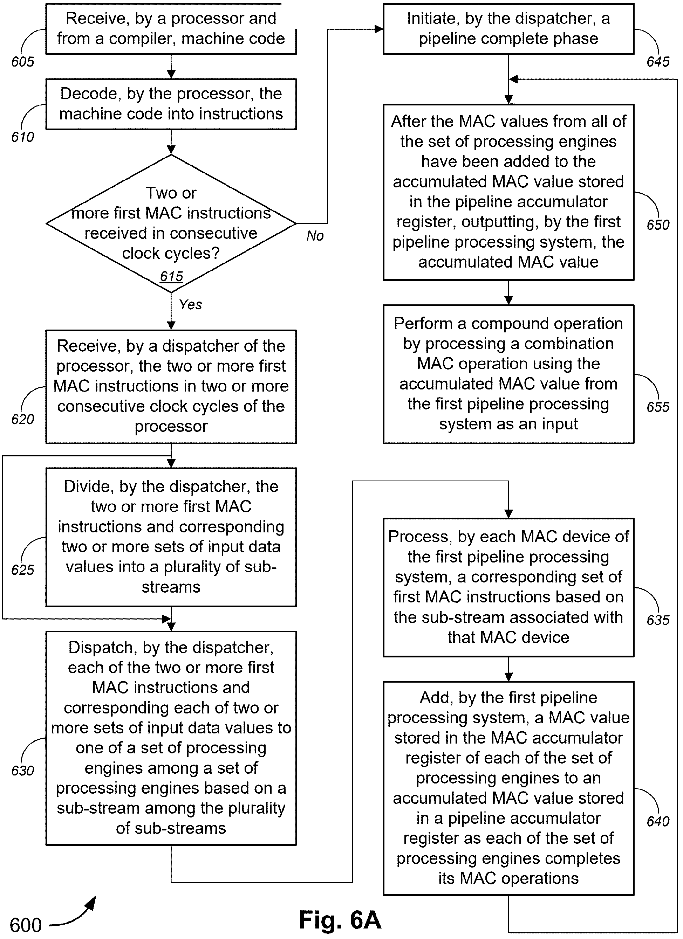

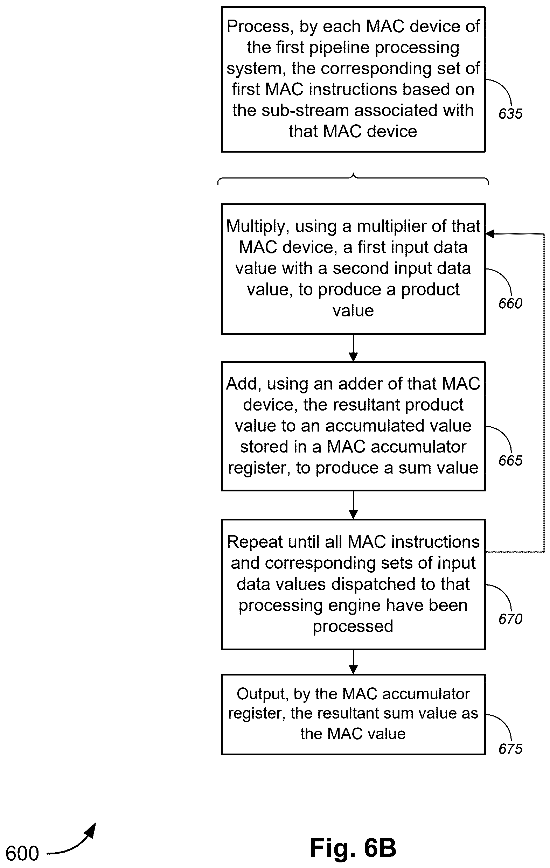

Figs. 6A and 6B depict another example method 600 for implementing processor performance acceleration using hardware-enhanced multiply-accumulate streaming. In examples, the operations of example method 600 may be performed by a processor (e.g., processor 102b of Fig. 1B), a dispatcher(s) (e.g., dispatcher(s) 108, 205, or 430a-430b of Figs. 1A, 2A, or 4), a processing engine (e.g., processing engine(s) 114a-114n or 210a-210c of Figs. 1B or 2B), and/or a MAC device (e.g., MAC device(s) 116a-116n or 215a-215c of Figs. 1B or 2B).

In the example method 600 of Fig. 6A, at operation 605, a processor receives machine code from a compiler. Like in method 500 of Fig. 5A, the compiler is either disposed on the processor, such as shown in the example systems 100A and 100B (e.g., compiler 104 of Figs. 1A and 1B) or disposed external to the processor. The processor decodes the machine code into one or more instructions (at operation 610), in some cases, using a decoder (e.g., decoder 106 of Figs. 1A and 1B). At operation 615, a dispatcher of the processor receives the one or more instructions and determines whether two or more first MAC instructions directed to a first pipeline processing system have been received in consecutive clock cycles of the processor. Based on a determination that two or more first MAC instructions have been received in consecutive clock cycles, method 600 continues onto the process at operation 620. Based on a determination that two or more first MAC instructions have not been received in consecutive clock cycles (e.g., either receiving a pipeline bubble corresponding to an absence of a MAC instruction or receiving a second MAC instruction directed to a second pipeline processing system), method 600 continues onto the process at operation 645.

At operation 620, the dispatcher receives the two or more first MAC instructions directed to the first pipeline processing system in two or more consecutive clock cycles of the processor. Method 600 either continues onto the process at operation 625 or continues onto the process at operation 630. At operation 625, the dispatcher divides the two or more first MAC instructions and corresponding two or more sets of input data values into a plurality of sub-streams, based at least on a MAC operational latency in terms of a number of clock cycles of the processor that is used to complete a single MAC operation among the two or more first MAC operations. In the case that a MAC device of each processing engine among a plurality of processing engines of the first pipeline processing system that is used to process the two or more first MAC instructions and the corresponding two or more sets of input data values includes a SIMD engine having a width corresponding to a number of concurrent MAC operations that can be processed at a time, dividing the two or more first MAC instructions and the corresponding two or more sets of input data values (at operation 625) is further based on the width of the SIMD. In the case that dependencies are identified within any of the two or more first MAC operations, dividing the two or more first MAC instructions and the corresponding two or more sets of input data values (at operation 625) is further based on the dependencies identified within the first MAC operations among the two or more first MAC operations, with dependent first MAC operations being dispatched to the same sub-stream. In examples in which the process at operation 625 is skipped, either the division into the plurality of sub-streams had previously already occurred or division into the plurality of sub-streams is an integrated part of the dispatching process of operation 630. In some instances, default divisioning may be implemented. For example, where a MAC operational latency is known for particular MAC operations being processed, the dispatcher may be configurable or re-configurable to automatically divide into a pre-determined number of sub-streams and to dispatch accordingly (in some cases, in an integrated dispatch step (such as the process at operation 630)).

At operation 630, the dispatcher dispatches each of the two or more first MAC instructions and corresponding each of two or more sets of input data values to one of a set of processing engines among the plurality of processing engines based on a sub-stream among the plurality of sub-streams into which that first MAC instruction was divided. In examples, a number of processing engines of the set of processing engines corresponds to a number of sub-streams into which the two or more first MAC instructions are divided. At operation 635, each MAC device of the first pipeline processing system processes a corresponding set of first MAC instructions based on the sub-stream associated with that MAC device. The MAC devices of the first pipeline processing system process the two or more sets of input data values for the plurality of sub-streams in consecutive clock cycles (an example of which is shown and described below with respect to Fig. 6B). An output value from the MAC device corresponding to each processing engine is stored in a MAC accumulator register for that processing engine. At operation 640, the first pipeline processing system adds a MAC value stored in the MAC accumulator register of each of the set of processing engines to an accumulated MAC value stored in a pipeline accumulator register as each of the set of processing engines completes its MAC operations. Method 600 continues onto the process at operation 650.

At operation 645, in response to receiving, in a clock cycle following receipt of the two or more first MAC instructions, one of a pipeline bubble corresponding to an absence of a MAC instruction or a second MAC instruction directed to the second pipeline processing system, the dispatcher initiates a pipeline complete phase in which subsequent MAC instructions that are received by the dispatcher are directed away from the first pipeline processing system. At operation 650, after the MAC values from all of the set of processing engines have been added to the accumulated MAC value stored in the pipeline accumulator register, the first pipeline processing system outputs the accumulated MAC value. At operation 655, the processor performs a compound operation by processing a combination MAC operation using the accumulated MAC value from the first pipeline processing system as one of two or more inputs for the combination MAC operation. In some examples, each of the two or more MAC operations includes one of a multiplication operation, a division operation, a sum operation, a subtraction operation, a squaring operation, or an inverse operation. In examples, the combination MAC operation includes one of a mean operation, a variance operation, a standard deviation operation, a square root operation, a SoftMax operation, or a LayerNorm operation.

Referring to Fig. 6B, in some examples, processing the corresponding set of first MAC instructions based on the sub-stream associated with that MAC device (at operation 635) includes:

(1) a multiplier of that MAC device multiplying a first input data value (e.g., from the first input register) with a second input data value (e.g., from the second input register), to produce a resultant product value (at operation 660);
(2) an adder of that MAC device adding the resultant product value to an accumulated value that is stored in the MAC accumulator register, to produce a resultant sum value that is stored in the MAC accumulator register (at operation 665);
(3) that processing engine repeating the multiplying and adding processes at operations 660 and 665 until all MAC instructions and corresponding sets of input data values that are dispatched to that processing engine have been processed (at operation 670); and
(4) the MAC accumulator register outputting the resultant sum value as the MAC value, the MAC value being added to the accumulated MAC value (at operation 640).

Fig. 2B depicts the process described at operations 660-675.
With reference to Figs. 5A, 5B, 6A, and 6B as described above, in an example, the MAC device(s), the MAC instruction(s), the MAC operation(s), the MAC value(s), the accumulated MAC value(s), and the associated MAC hardware refer to a scalar MAC device(s), a scalar MAC instruction(s), a scalar MAC operation(s), a scalar MAC value(s), an accumulated scalar MAC value(s), and the associated scalar MAC hardware, respectively. In other examples, the MAC device(s), the MAC instruction(s), the MAC operation(s), the MAC value(s), the accumulated MAC value(s), and the associated MAC hardware refer to a VMAC device(s), a VMAC instruction(s), a VMAC operation(s), a VMAC value(s), an accumulated VMAC value(s), and associated VMAC hardware, respectively.

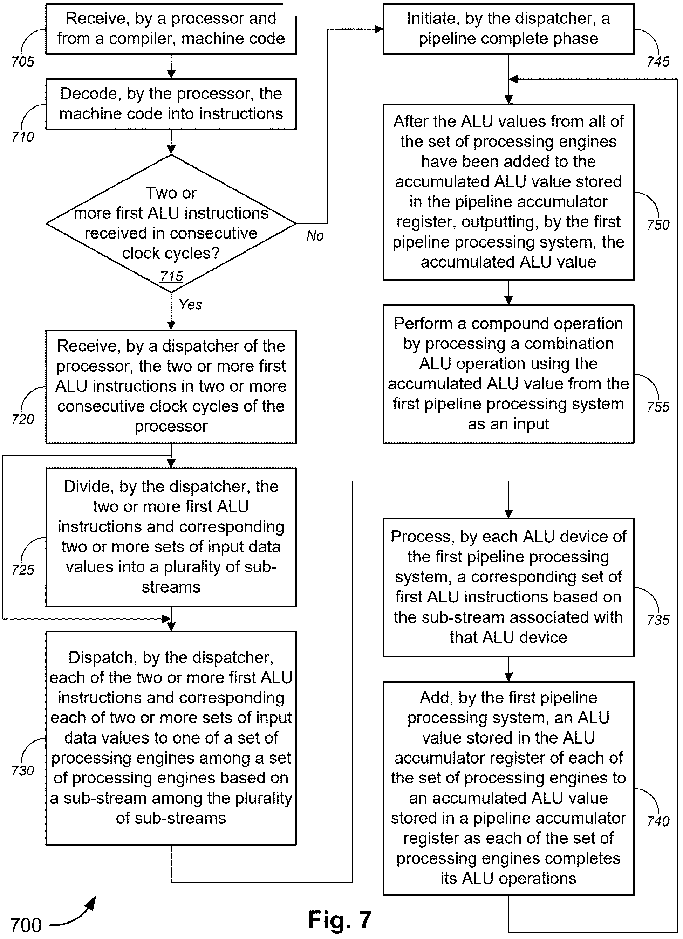

Fig. 7 depicts yet another example method 700 for implementing processor performance acceleration using hardware-enhanced multiply-accumulate streaming. In examples, the operations of example method 700 may be performed by a processor (e.g., processor 102b of Fig. 1B), a dispatcher(s) (e.g., dispatcher(s) 108, 205, or 430a-430b of Figs. 1A, 2A, or 4), a processing engine (e.g., processing engine(s) 130a-130o of Fig. 1B), and/or an ALU device (e.g., ALU device(s) 132a-132o of Fig. 1B).
In the example method 700 of Fig. 7A, at operation 705, a processor receives machine code from a compiler. Like in method 500 of Fig. 5A or method 600 of Fig. 6A, the compiler is either disposed on the processor, such as shown in the example systems 100A and 100B (e.g., compiler 104 of Figs. 1A and 1B) or disposed external to the processor. The processor decodes the machine code into one or more instructions (at operation 710), in some cases, using a decoder (e.g., decoder 106 of Figs. 1A and 1B). At operation 715, a dispatcher of the processor receives the one or more instructions and determines whether two or more first ALU instructions directed to a first pipeline processing system have been received in consecutive clock cycles of the processor. Based on a determination that two or more first ALU instructions have been received in consecutive clock cycles, method 700 continues onto the process at operation 720. Based on a determination that two or more first ALU instructions have not been received in consecutive clock cycles (e.g., either receiving a pipeline bubble corresponding to an absence of an ALU instruction or receiving a second ALU instruction directed to a second pipeline processing system), method 700 continues onto the process at operation 745.
At operation 720, the dispatcher receives the two or more first ALU instructions directed to the first pipeline processing system in two or more consecutive clock cycles of the processor. Method 700 either continues onto the process at operation 725 or continues onto the process at operation 730. At operation 725, the dispatcher divides the two or more first ALU instructions and corresponding two or more sets of input data values into a plurality of sub-streams, based at least on an ALU operational latency in terms of a number of clock cycles of the processor that is used to complete a single ALU operation among the two or more first ALU operations. In the case that an ALU device of each processing engine among a plurality of processing engines of the first pipeline processing system that is used to process the two or more first ALU instructions and the corresponding two or more sets of input data values includes a SIMD engine having a width corresponding to a number of concurrent ALU operations that can be processed at a time, dividing the two or more first ALU instructions and the corresponding two or more sets of input data values (at operation 725) is further based on the width of the SIMD. In the case that dependencies are identified within any of the two or more first ALU operations, dividing the two or more first ALU instructions and the corresponding two or more sets of input data values (at operation 725) is further based on the dependencies identified within the first ALU operations among the two or more first ALU operations, with dependent first ALU operations being dispatched to the same sub-stream. In examples in which the process at operation 725 is skipped, either the division into the plurality of sub-streams had previously already occurred or division into the plurality of sub-streams is an integrated part of the dispatching process of operation 730. In some instances, default divisioning may be implemented. For example, where an ALU operational latency is known for particular ALU operations being processed, the dispatcher may be configurable or re-configurable to automatically divide into a pre-determined number of sub-streams and to dispatch accordingly (in some cases, in an integrated dispatch step (such as the process at operation 730)).

At operation 730, the dispatcher dispatches each of the two or more first ALU instructions and corresponding each of two or more sets of input data values to one of a set of processing engines among the plurality of processing engines based on a sub-stream among the plurality of sub-streams into which that first ALU instruction was divided. In examples, a number of processing engines of the set of processing engines corresponds to a number of sub-streams into which the two or more first ALU instructions are divided. At operation 735, each ALU device of the first pipeline processing system processes a corresponding set of first ALU instructions based on the sub-stream associated with that ALU device. The ALU devices of the first pipeline processing system process the two or more sets of input data values for the plurality of sub-streams in consecutive clock cycles. An output value from the ALU device corresponding to each processing engine is stored in an ALU accumulator register for that processing engine. At operation 740, the first pipeline processing system adds an ALU value stored in the ALU accumulator register of each of the set of processing engines to an accumulated ALU value stored in a pipeline accumulator register as each of the set of processing engines completes its ALU operations. Method 700 continues onto the process at operation 750.

At operation 745, in response to receiving, in a clock cycle following receipt of the two or more first ALU instructions, one of a pipeline bubble corresponding to an absence of an ALU instruction or a second ALU instruction directed to the second pipeline processing system, the dispatcher initiates a pipeline complete phase in which subsequent ALU instructions that are received by the dispatcher are directed away from the first pipeline processing system. At operation 750, after the ALU values from all of the set of processing engines have been added to the accumulated ALU value stored in the pipeline accumulator register, the first pipeline processing system outputs the accumulated ALU value. At operation 755, the processor performs a compound operation by processing a combination ALU operation using the accumulated ALU value from the first pipeline processing system as one of two or more inputs for the combination ALU operation. In some examples, each of the two or more ALU operations includes one of a multiplication operation, a division operation, a sum operation, a subtraction operation, an exponential operation, a logarithmic operation, a squaring operation, a square root operation, or an inverse operation. In examples, the combination ALU operation includes one of a mean operation, a variance operation, a standard deviation operation, a SoftMax operation, or a LayerNorm operation.

While the techniques and procedures in methods 500, 600, and 700 are depicted and/or described in a certain order for purposes of illustration, it should be appreciated that certain procedures may be reordered and/or omitted within the scope of various embodiments. Moreover, while the methods 500, 600, and 700 may be implemented by or with (and, in some cases, are described below with respect to) the systems, examples, or embodiments 100A, 100B, 200A, 200B, 300, and 400 of Figs. 1A, 1B, 2A, 2B, 3, and 4, respectively (or components thereof), such methods may also be implemented using any suitable hardware (or software) implementation. Similarly, while each of the systems, examples, or embodiments 100A, 100B, 200A, 200B, 300, and 400 of Figs. 1A, 1B, 2A, 2B, 3, and 4, respectively (or components thereof), can operate according to the methods 500, 600, and 700 (e.g., by executing instructions embodied on a computer readable medium), the systems, examples, or embodiments 100A, 100B, 200A, 200B, 300, and 400 of Figs. 1A, 1B, 2A, 2B, 3, and 4 can each also operate according to other modes of operation and/or perform other suitable procedures.

As should be appreciated from the foregoing, the present technology provides multiple technical benefits and solutions to technical problems. For instance, due to longer latencies of MAC (or ALU) units, conventional processors or AI accelerators experience a decrease in performance for tasks that use accumulate operations. For example, when there are thousands or tens of thousands of MAC or ALU operations to calculate (such as with the thousands or tens of thousands of LLM tokens that have to be processed in mean operations, sum operations, etc., prior to processing squaring operations, square root operations, or standard deviation operations when performing SoftMax or LayerNorm operations, or the like), the latency can become excessive, thereby significantly decreasing the performance of theses conventional processors. Where some processors or AI accelerators may use software unrolling (which is a loop transformation technique that attempts to optimize a program's execution speed at the expense of its binary size) to compensate for MAC unit latency, which could lead to greater demand for registers and potentially lower performance if there are insufficient numbers of registers. The present technology provides for processor performance acceleration using hardware-enhanced multiply-accumulate streaming. The sub-streaming by the modified dispatcher, as described in detail above, along with the processing of the plurality of sub-streams in consecutive clock cycles (rather than waiting through latency-induced cycles for accumulate operations to complete before processing using accumulated values), then adding sub-stream accumulated results that are stored in sub-stream accumulators into an accumulated value that is stored in a pipeline accumulator significantly improves the performance of the processor, by efficiently processing MAC or ALU operations during latency cycles during which typical processors are left waiting. In some cases, 50 % or greater processor performance boost can be achieved. For hardware-enhanced implementation, as described herein, fewer registers are required compared with the software unrolling approach. As compared with conventional processors and the software unrolling approach, less time (i.e., fewer clock cycles) and/or fewer hardware components (in this case, registers) are used for sub-streaming, thus resulting in energy savings.

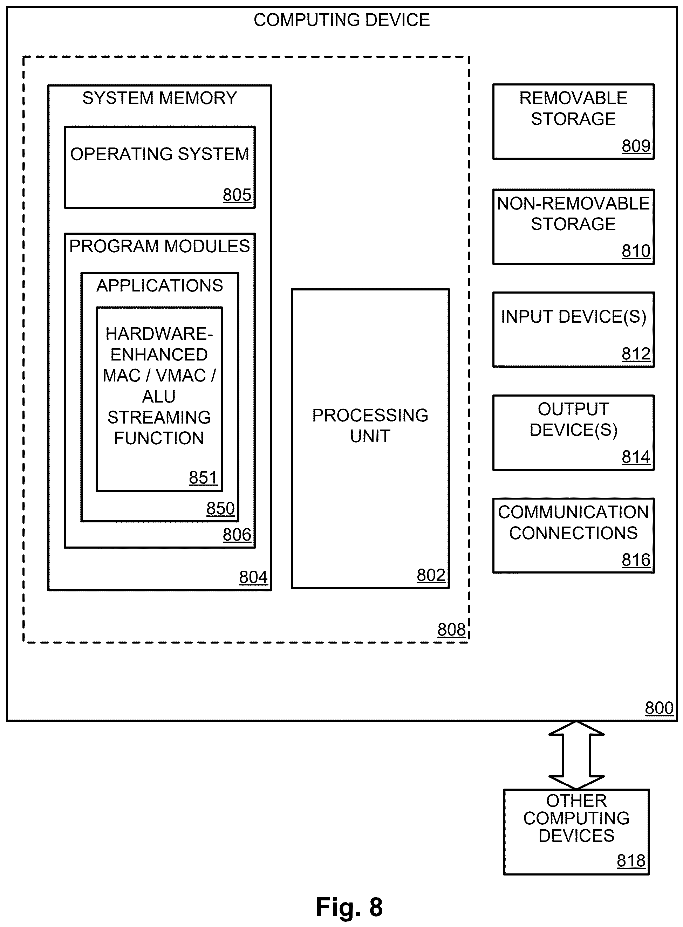

Fig. 8 depicts a block diagram illustrating physical components (i.e., hardware) of a computing device 800 with which examples of the present disclosure may be practiced. The computing device components described below may be suitable for a client device implementing the processor performance acceleration using hardware-enhanced multiply-accumulate streaming, as discussed above. In a basic configuration, the computing device 800 may include at least one processing unit 802 and a system memory 804. The processing unit(s) (e.g., processors) may be referred to as a processing system. Depending on the configuration and type of computing device, the system memory 804 may include volatile storage (e.g., random access memory), non-volatile storage (e.g., read-only memory), flash memory, or any combination of such memories. The system memory 804 may include an operating system 805 and one or more program modules 806 suitable for running software applications 850, such as hardware-enhanced MAC/VMAC/ALU streaming function 851, to implement one or more of the systems or methods described above.

The operating system 805, for example, may be suitable for controlling the operation of the computing device 800. Furthermore, aspects of the invention may be practiced in conjunction with a graphics library, other operating systems, or any other application program and is not limited to any particular application or system. This basic configuration is illustrated in Fig. 8 by those components within a dashed line 808. The computing device 800 may have additional features or functionalities. For example, the computing device 800 may also include additional data storage devices (which may be removable and/or non-removable), such as, for example, magnetic disks, optical disks, or tape. Such additional storage is illustrated in Fig. 8 by a removable storage device(s) 809 and a non-removable storage device(s) 810.

As stated above, a number of program modules and data files may be stored in the system memory 804. While executing on the processing unit 802, the program modules 806 may perform processes including one or more of the operations of the method(s) as illustrated in Figs. 5A-7, or one or more operations of the system(s) and/or apparatus(es) as described with respect to Figs. 1A-4, or the like. Other program modules that may be used in accordance with examples of the present disclosure may include applications such as electronic mail and contacts applications, word processing applications, spreadsheet applications, database applications, slide presentation applications, drawing or computer-aided application programs, AI applications and ML modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via a system-on-a-chip ("SOC") where each or many of the components illustrated in Fig. 8 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 800 on the single integrated circuit (or chip). Examples of the present disclosure may also be practiced using other technologies capable of performing logical operations such as, for example, AND, OR, and NOT, including mechanical, optical, fluidic, and/or quantum technologies.

The computing device 800 may also have one or more input devices 812 such as a keyboard, a mouse, a pen, a sound input device, and/or a touch input device, etc. The output device(s) 814 such as a display, speakers, and/or a printer, etc. may also be included. The aforementioned devices are examples and others may be used. The computing device 800 may include one or more communication connections 816 allowing communications with other computing devices 818. Examples of suitable communication connections 816 include radio frequency ("rf") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 804, the removable storage device 809, and the non-removable storage device 810 are all computer storage media examples (i.e., memory storage). Computer storage media may include random access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 800. Any such computer storage media may be part of the computing device 800. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, communication media may include wired media such as a wired network or direct-wired connection, and wireless media such as acoustic, RF, infrared, and other wireless media.

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where $n$ denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of $n$ in X05n may be the same or different from the integer value of $n$ in X10n for component #2 X10a-X10n, and so on. In other cases, other suffixes (e.g., $s, t, u,$ v, w, $x, y,$ and/or z) may similarly denote non-negative integer numbers that (together with $n$ or other like suffixes) may be either all the same as each other, all different from each other, or some combination of same and different (e.g., one set of two or more having the same values with the others having different values, a plurality of sets of two or more having the same value with the others having different values).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements B and C, and/or elements A, B, and C (and so on).

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the spirit of the broader aspects of the general inventive concept embodied in this application that do not depart from the broader scope of the claimed invention.

Alternatively or in addition to the other examples described herein, examples include any combination of the following clauses:

Clause A. A processor-implemented method, comprising: receiving, by a dispatcher of a processor, two or more first multiplier-accumulator ("MAC") instructions in two or more consecutive clock cycles of the processor, each first MAC instruction being directed to a first pipeline processing system among one or more pipeline processing systems of the processor to process input data using a corresponding first MAC operation among two or more first MAC operations; in response to receiving the two or more first MAC instructions, dispatching, by the dispatcher, each of the two or more first MAC instructions and corresponding each of two or more sets of input data values to one of a set of input registers among a plurality of sets of input registers based on a sub-stream among a plurality of sub-streams, wherein a number of sets of the plurality of sets of input registers corresponds to a number of sub-streams for processing the two or more first MAC instructions, the two or more sets of input data values for the plurality of sub-streams being processed by a MAC device of a processing engine in consecutive clock cycles, wherein an output value from the MAC device corresponding to each sub-stream is stored in a MAC accumulator register for that sub-stream, among a plurality of MAC accumulators corresponding to the plurality of sub-streams; adding, by the first pipeline processing system, a MAC value stored in the MAC accumulator register corresponding to each sub-stream to an accumulated MAC value stored in a pipeline accumulator register as the MAC device completes MAC operations for that sub-stream; in response to receiving, in a clock cycle following receipt of the two or more first MAC instructions, one of a pipeline bubble or a second MAC instruction directed to a second pipeline processing system among the one or more pipeline processing systems, initiating, by the dispatcher, a pipeline complete phase in which subsequent MAC instructions that are received by the dispatcher are directed away from the first pipeline processing system, wherein the pipeline bubble corresponds to an absence of a MAC instruction; and after the MAC values corresponding to all of the plurality of sub-streams have been added to the accumulated MAC value stored in the pipeline accumulator register, outputting, by the first pipeline processing system, the accumulated MAC value.

Clause B. The processor-implemented method of clause A, further comprising: receiving, by the processor and from a compiler, machine code; and decoding, by the processor, the machine code into the two or more first MAC instructions.

Clause C. The processor-implemented method of clause A, wherein the MAC device is a vector MAC ("VMAC") device, wherein the two or more first MAC instructions are two or more first VMAC instructions, wherein the two or more first MAC operations are two or more first VMAC operations, wherein the MAC value and the accumulated MAC value are VMAC values, wherein each MAC accumulator register is a VMAC accumulator register, wherein the VMAC device includes a single instruction multiple data ("SIMD") engine having a width corresponding to a number of concurrent VMAC operations that can be processed at a time, wherein the method further comprises: dividing, by the dispatcher, the two or more first MAC instructions and corresponding two or more sets of input data values into the plurality of sub-streams based on a combination of: VMAC operational latency in terms of a number of clock cycles of the processor that is used to complete a single VMAC operation among the two or more first VMAC operations; and the width of the SIMD.

Clause D. The processor-implemented method of clause C, further comprising: determining, by the dispatcher, whether there are dependencies within any of the two or more VMAC operations corresponding to the two or more first VMAC instructions; wherein dividing the two or more first VMAC instructions into the plurality of sub-streams is further based on dependencies identified within first VMAC operations among the two or more first VMAC operations, with dependent first VMAC operations being dispatched to the same sub-stream.

Clause E. The processor-implemented method of clause C, wherein each set of input data values among the two or more sets of input data values includes a first input data value and a second input data value; wherein dispatching each of the two or more first VMAC instructions and corresponding each of the two or more sets of input data values to the one of the set of input registers comprises: sending, by the dispatcher, the first input data value to a first input register of a corresponding sub-stream for storage and sending the second input data value to a second input register of the corresponding sub-stream for storage; wherein the method further comprises: performing a processing cycle including processing of a set of VMAC operations for each sub-stream in turn, one sub-stream at a time, until all sub-streams in the plurality of sub-streams have each had one set of VMAC operations among a plurality of sets of VMAC operations for that sub-stream processed by the VMAC device; and repeating the processing cycle for a next set of VMAC operations for each sub-stream, until processing of the two or more VMAC instructions have completed; wherein processing of the set of VMAC operations for each sub-stream in each processing cycle comprises, for each VMAC operation among the set of VMAC operations: multiplying, using a multiplier of the VMAC device, the first input data value from the first input register corresponding to that sub-stream with the second input data value from the second input register corresponding to that sub-stream, to produce a resultant product value for that sub-stream; and adding, using an adder of the VMAC device, the resultant product value for that sub-stream to an accumulated value that is stored in the VMAC accumulator register corresponding to that sub-stream, to produce a resultant sum value for that sub-stream that is stored in the VMAC accumulator register; wherein the multiplying and adding of the other VMAC operations among the set of VMAC operations for that sub-stream in that processing cycle are performed concurrently; and after the plurality of sets of VMAC operations for each sub-stream have been processed, outputting, by the VMAC accumulator register for that sub-stream, the resultant sum value as the VMAC value for that sub-stream.

Clause F. The processor-implemented method of clause C, further comprising: performing a compound operation by processing a combination VMAC operation using the accumulated VMAC value from the first pipeline processing system as one of two or more inputs for the combination VMAC operation.

Clause G. The processor-implemented method of clause F, wherein each of the two or more VMAC operations includes one of a multiplication operation, a division operation, a sum operation, a subtraction operation, a squaring operation, or an inverse operation, wherein the combination VMAC operation includes one of a mean operation, a variance operation, a standard deviation operation, a square root operation, a SoftMax operation, or a LayerNorm operation.

Clause H. A processor having hardware components comprising: a dispatcher including a first state machine; and a first pipeline processing system among one or more pipeline processing systems, including: a plurality of processing engines, each processing engine including a multiplier-accumulator ("MAC") device, which includes a MAC accumulator register; and a pipeline accumulator register; wherein the dispatcher performs first operations based on logic of the first state machine, the first operations comprising: receiving two or more first MAC instructions in two or more consecutive clock cycles of the processor, each first MAC instruction being directed to the first pipeline processing system to process input data using a corresponding first MAC operation among two or more first MAC operations; in response to receiving the two or more first MAC instructions, dividing the two or more first MAC instructions and corresponding two or more sets of input data values into a plurality of sub-streams based on MAC operational latency in terms of a number of clock cycles of the processor that is used to complete a single MAC operation among the two or more first MAC operations; and dispatching each of the two or more first MAC instructions and corresponding each of the two or more sets of input data values to one of a set of processing engines among the plurality of processing engines based on a sub-stream into which that first MAC instruction was divided, wherein a number of processing engines of the set of processing engines corresponds to a number of sub-streams into which the two or more first MAC instructions are divided, the two or more sets of input data values for the plurality of sub-streams being processed by the MAC devices of the set of processing engines in consecutive clock cycles, wherein an output value from the MAC device of each processing engine is stored in the MAC accumulator register for that processing engine; in response to receiving, in a clock cycle following receipt of the two or more first MAC instructions, one of a pipeline bubble or a second MAC instruction directed to a second pipeline processing system among the one or more pipeline processing systems, initiating a pipeline complete phase in which subsequent MAC instructions that are received by the dispatcher are directed away from the first pipeline processing system, wherein the pipeline bubble corresponds to an absence of a MAC instruction; and wherein the first pipeline processing system performs second operations comprising: adding a MAC value stored in the MAC accumulator register of each of the set of processing engines to an accumulated MAC value stored in the pipeline accumulator register as each of the set of processing engines completes its MAC operations; and after the MAC values from all of the set of processing engines have been added to the accumulated MAC value stored in the pipeline accumulator register, outputting the accumulated MAC value.

Clause I. The processor of clause H, wherein the first operations further comprise: determining whether there are dependencies within any of the two or more MAC operations corresponding to the two or more first MAC instructions; wherein dividing the two or more first MAC instructions into the plurality of sub-streams is based on dependencies identified within first MAC operations among the two or more first MAC operations, with dependent first MAC operations being dispatched to the same sub-stream.

Clause J. The processor of clause H, wherein the two or more first MAC instructions are decoded from machine code that is received by the processor from a compiler.

Clause K. The processor of clause H, wherein the MAC device for each processing engine further includes: a first input register; and a second input register; wherein each set of input data values among the two or more sets of input data values includes a first input data value and a second input data value; wherein dispatching each of the two or more first MAC instructions and corresponding each of the two or more sets of input data values to the one of the set of processing engines comprises: sending the first input data value to the first input register of a corresponding MAC device of that processing engine for storage and sending the second input data value to the second input register of the corresponding MAC device for storage.

Clause L. The processor of clause K, wherein the MAC device for each processing engine further includes: a multiplier; and an adder; wherein each processing engine performs third operations, the third operations comprising: multiplying, using the multiplier, the first input data value from the first input register with the second input data value from the second input register, to produce a resultant product value; adding, using the adder, the resultant product value to an accumulated value that is stored in the MAC accumulator register, to produce a resultant sum value that is stored in the MAC accumulator register; repeating the multiplying and adding until all MAC instructions and corresponding sets of input data values that are dispatched to that processing engine have been processed; and outputting, by the MAC accumulator register, the resultant sum value as the MAC value.

Clause M. The processor of clause H, wherein the MAC device is a scalar MAC device, wherein each of the two or more first MAC operations is a scalar MAC operation, wherein the MAC value and the accumulated MAC value are scalar MAC values.

Clause N. The processor of clause H, wherein the MAC device is a vector MAC ("VMAC") device, wherein the two or more first MAC instructions are two or more first VMAC instructions, wherein each of the two or more first MAC operations is a VMAC operation, wherein the MAC value and the accumulated MAC value are VMAC values.

Clause O. The processor of clause N, wherein the VMAC device includes a single instruction multiple data ("SIMD") engine having a width corresponding to a number of concurrent VMAC operations that can be processed at a time, wherein dividing the two or more first MAC instructions into the plurality of sub-streams is further based on the width of the SIMD.

Clause P. The processor of clause H, wherein the hardware components further comprise: a second pipeline processing system among the one or more pipeline processing systems, the second pipeline processing system including a second state machine that is a duplicate of the first state machine; wherein the second pipeline processing system performs fourth operations based on logic of the second state machine, the fourth operations comprising: performing a compound operation by processing a combination MAC operation using the accumulated MAC value from the first pipeline processing system as one of two or more inputs for the combination MAC operation.

Clause Q. The processor of clause P, wherein each of the two or more MAC operations includes one of a multiplication operation, a division operation, a sum operation, a subtraction operation, a squaring operation, or an inverse operation, wherein the combination MAC operation includes one of a mean operation, a variance operation, a standard deviation operation, a square root operation, a SoftMax operation, or a LayerNorm operation.

Clause R. A processor having hardware components comprising: a dispatcher including a first state machine; and a first pipeline processing system among one or more pipeline processing systems, including: a plurality of processing engines, each processing engine including an arithmetic logic unit ("ALU") device, which includes an ALU accumulator register; and a pipeline accumulator register; wherein the dispatcher performs first operations based on logic of the first state machine, the first operations comprising: receiving two or more first ALU instructions in two or more consecutive clock cycles of the processor, each first ALU instruction being directed to the first pipeline processing system to process input data using a corresponding first ALU operation among two or more first ALU operations; in response to receiving the two or more first ALU instructions, dispatching each of the two or more first ALU instructions and corresponding each of the two or more sets of input data values to one of a set of processing engines among a set of processing engines based on a sub-stream among a plurality of sub-streams, wherein a number of processing engines of the set of processing engines corresponds to a number of sub-streams that is used to process the two or more first ALU instructions, the two or more sets of input data values for the plurality of sub-streams being processed by the ALU devices of the set of processing engines in consecutive clock cycles, wherein an output value from the ALU device of each processing engine is stored in the ALU accumulator register for that processing engine; in response to receiving, in a clock cycle following receipt of the two or more first ALU instructions, one of a pipeline bubble or a second ALU instruction directed to a second pipeline processing system among the one or more pipeline processing systems, initiating a pipeline complete phase in which subsequent ALU instructions that are received by the dispatcher are directed away from the first pipeline processing system, wherein the pipeline bubble corresponds to an absence of an ALU instruction; and wherein the first pipeline processing system performs second operations comprising: adding an ALU value stored in the ALU accumulator register of each of the set of processing engines to an accumulated ALU value stored in the pipeline accumulator register as each of the set of processing engines completes its ALU operations; and after the ALU values from all of the set of processing engines have been added to the accumulated ALU value stored in the pipeline accumulator register, outputting the accumulated ALU value.

Clause S. The processor of clause R, wherein the first operations further comprises: dividing the two or more first ALU instructions and corresponding two or more sets of input data values into the plurality of sub-streams based on ALU operational latency in terms of a number of clock cycles of the processor that is used to complete a single ALU operation among the two or more first ALU operations.

Clause T. The processor of clause R, wherein the hardware components further comprise: a second pipeline processing system among the one or more pipeline processing systems, the second pipeline processing system including a second state machine that is a duplicate of the first state machine; wherein the second pipeline processing system performs third operations based on logic of the second state machine, the third operations comprising: performing a compound operation by processing a combination ALU operation using the accumulated ALU value from the first pipeline processing system as one of two or more inputs for the combination ALU operation; wherein each of the two or more ALU operations includes one of a multiplication operation, a division operation, a sum operation, a subtraction operation, an exponential operation, a logarithmic operation, a squaring operation, a square root operation, or an inverse operation, wherein the combination ALU operation includes one of a mean operation, a variance operation, a standard deviation operation, a SoftMax operation, or a LayerNorm operation.

Clause U. Systems and methods for processor performance acceleration using hardware-enhanced multiply-accumulate streaming. A dispatcher of a processor dispatches each of two or more multiply-accumulate ("MAC") or arithmetic logic unit ("ALU") instructions (and corresponding input data values), which are directed to a pipeline processing system and received in two or more consecutive clock cycles, to one of a set of input registers among a plurality of sets of input registers based on a sub-stream among a plurality of sub-streams, into which the two or more MAC or ALU instructions have been divided. The input data values for the plurality of sub-streams are processed by a MAC device or an ALU device in consecutive clock cycles, with output values from each sub-stream being stored in a sub-stream accumulator for that sub-stream, the accumulated value of which are added to a pipeline accumulator after all sub-streams have been processed.

## Claims

1. A processor-implemented method (500), comprising:

receiving (520), by a dispatcher of a processor, two or more first multiplier-accumulator "MAC" instructions in two or more consecutive clock cycles of the processor, each first MAC instruction being directed to a first pipeline processing system among one or more pipeline processing systems of the processor to process input data using a corresponding first MAC operation among two or more first MAC operations;
in response to receiving the two or more first MAC instructions, dispatching (530), by the dispatcher, each of the two or more first MAC instructions and corresponding each of two or more sets of input data values to one of a set of input registers among a plurality of sets of input registers based on a sub-stream among a plurality of sub-streams, wherein a number of sets of the plurality of sets of input registers corresponds to a number of sub-streams for processing the two or more first MAC instructions, the two or more sets of input data values for the plurality of sub-streams being processed by a MAC device of a processing engine in consecutive clock cycles, wherein an output value from the MAC device corresponding to each sub-stream is stored in a MAC accumulator register for that sub-stream, among a plurality of MAC accumulators corresponding to the plurality of sub-streams;
adding (540), by the first pipeline processing system, a MAC value stored in the MAC accumulator register corresponding to each sub-stream to an accumulated MAC value stored in a pipeline accumulator register as the MAC device completes MAC operations for that sub-stream;
in response to receiving, in a clock cycle following receipt of the two or more first MAC instructions, one of a pipeline bubble or a second MAC instruction directed to a second pipeline processing system among the one or more pipeline processing systems, initiating (545), by the dispatcher, a pipeline complete phase in which subsequent MAC instructions that are received by the dispatcher are directed away from the first pipeline processing system, wherein the pipeline bubble corresponds to an absence of a MAC instruction; and
after the MAC values corresponding to all of the plurality of sub-streams have been added to the accumulated MAC value stored in the pipeline accumulator register, outputting (550), by the first pipeline processing system, the accumulated MAC value.

2. The processor-implemented method of claim 1, further comprising:

receiving, by the processor and from a compiler, machine code; and
decoding, by the processor, the machine code into the two or more first MAC instructions.

3. The processor-implemented method of claim 1 or claim 2, wherein the MAC device is a vector MAC "VMAC" device, wherein the two or more first MAC instructions are two or more first VMAC instructions, wherein the two or more first MAC operations are two or more first VMAC operations, wherein the MAC value and the accumulated MAC value are VMAC values, wherein each MAC accumulator register is a VMAC accumulator register, wherein the VMAC device includes a single instruction multiple data "SIMD" engine having a width corresponding to a number of concurrent VMAC operations that can be processed at a time, wherein the method further comprises:
dividing, by the dispatcher, the two or more first MAC instructions and corresponding two or more sets of input data values into the plurality of sub-streams based on a combination of:

VMAC operational latency in terms of a number of clock cycles of the processor that is used to complete a single VMAC operation among the two or more first VMAC operations; and
the width of the SIMD.

4. The processor-implemented method of claim 3, further comprising:

determining, by the dispatcher, whether there are dependencies within any of the two or more VMAC operations corresponding to the two or more first VMAC instructions;

wherein dividing the two or more first VMAC instructions into the plurality of sub-streams is further based on dependencies identified within first VMAC operations among the two or more first VMAC operations, with dependent first VMAC operations being dispatched to the same sub-stream.

5. The processor-implemented method of claim 3,

wherein each set of input data values among the two or more sets of input data values includes a first input data value and a second input data value;

wherein dispatching each of the two or more first VMAC instructions and corresponding each of the two or more sets of input data values to the one of the set of input registers comprises:

sending, by the dispatcher, the first input data value to a first input register of a corresponding sub-stream for storage and sending the second input data value to a second input register of the corresponding sub-stream for storage;

wherein the method further comprises:

performing a processing cycle including processing of a set of VMAC operations for each sub-stream in turn, one sub-stream at a time, until all sub-streams in the plurality of sub-streams have each had one set of VMAC operations among a plurality of sets of VMAC operations for that sub-stream processed by the VMAC device; and

repeating the processing cycle for a next set of VMAC operations for each sub-stream, until processing of the two or more VMAC instructions have completed;

wherein processing of the set of VMAC operations for each sub-stream in each processing cycle comprises, for each VMAC operation among the set of VMAC operations:

multiplying, using a multiplier of the VMAC device, the first input data value from the first input register corresponding to that sub-stream with the second input data value from the second input register corresponding to that sub-stream, to produce a resultant product value for that sub-stream; and

adding, using an adder of the VMAC device, the resultant product value for that sub-stream to an accumulated value that is stored in the VMAC accumulator register corresponding to that sub-stream, to produce a resultant sum value for that sub-stream that is stored in the VMAC accumulator register;

wherein the multiplying and adding of the other VMAC operations among the set of VMAC operations for that sub-stream in that processing cycle are performed concurrently; and

after the plurality of sets of VMAC operations for each sub-stream have been processed, outputting, by the VMAC accumulator register for that sub-stream, the resultant sum value as the VMAC value for that sub-stream.

6. The processor-implemented method of claim 3, further comprising:
performing a compound operation by processing a combination VMAC operation using the accumulated VMAC value from the first pipeline processing system as one of two or more inputs for the combination VMAC operation.

7. The processor-implemented method of claim 6, wherein each of the two or more VMAC operations includes one of a multiplication operation, a division operation, a sum operation, a subtraction operation, a squaring operation, or an inverse operation, wherein the combination VMAC operation includes one of a mean operation, a variance operation, a standard deviation operation, a square root operation, a SoftMax operation, or a LayerNorm operation.

8. A processor (102a) having hardware components comprising:

a dispatcher (108) including a first state machine (110); and
a first pipeline processing system (112) among one or more pipeline processing systems, including:

a plurality of processing engines (114), each processing engine including a multiplier-accumulator "MAC" device, which includes a MAC accumulator register; and
a pipeline accumulator register (128);

wherein the dispatcher performs first operations based on logic of the first state machine, the first operations comprising:

receiving (520) two or more first MAC instructions in two or more consecutive clock cycles of the processor, each first MAC instruction being directed to the first pipeline processing system to process input data using a corresponding first MAC operation among two or more first MAC operations;
in response to receiving the two or more first MAC instructions,

dividing (525) the two or more first MAC instructions and corresponding two or more sets of input data values into a plurality of sub-streams based on MAC operational latency in terms of a number of clock cycles of the processor that is used to complete a single MAC operation among the two or more first MAC operations; and
dispatching (530) each of the two or more first MAC instructions and corresponding each of the two or more sets of input data values to one of a set of processing engines among the plurality of processing engines based on a sub-stream into which that first MAC instruction was divided, wherein a number of processing engines of the set of processing engines corresponds to a number of sub-streams into which the two or more first MAC instructions are divided, the two or more sets of input data values for the plurality of sub-streams being processed by the MAC devices of the set of processing engines in consecutive clock cycles, wherein an output value from the MAC device of each processing engine is stored in the MAC accumulator register for that processing engine;

in response to receiving, in a clock cycle following receipt of the two or more first MAC instructions, one of a pipeline bubble or a second MAC instruction directed to a second pipeline processing system among the one or more pipeline processing systems, initiating (545) a pipeline complete phase in which subsequent MAC instructions that are received by the dispatcher are directed away from the first pipeline processing system, wherein the pipeline bubble corresponds to an absence of a MAC instruction; and

wherein the first pipeline processing system performs second operations comprising:

adding (540) a MAC value stored in the MAC accumulator register of each of the set of processing engines to an accumulated MAC value stored in the pipeline accumulator register as each of the set of processing engines completes its MAC operations; and
after the MAC values from all of the set of processing engines have been added to the accumulated MAC value stored in the pipeline accumulator register, outputting (550) the accumulated MAC value.

9. The processor of claim 8, wherein the first operations further comprise:

determining whether there are dependencies within any of the two or more MAC operations corresponding to the two or more first MAC instructions;
wherein dividing the two or more first MAC instructions into the plurality of sub-streams is based on dependencies identified within first MAC operations among the two or more first MAC operations, with dependent first MAC operations being dispatched to the same sub-stream.

10. The processor of claim 8, wherein the two or more first MAC instructions are decoded from machine code that is received by the processor from a compiler.

11. The processor of claim 8, wherein the MAC device for each processing engine further includes:

a first input register; and
a second input register;
wherein each set of input data values among the two or more sets of input data values includes a first input data value and a second input data value;
wherein dispatching each of the two or more first MAC instructions and corresponding each of the two or more sets of input data values to the one of the set of processing engines comprises:
sending the first input data value to the first input register of a corresponding MAC device of that processing engine for storage and sending the second input data value to the second input register of the corresponding MAC device for storage.

12. The processor of claim 11, wherein the MAC device for each processing engine further includes:

a multiplier; and
an adder;
wherein each processing engine performs third operations, the third operations comprising:

multiplying, using the multiplier, the first input data value from the first input register with the second input data value from the second input register, to produce a resultant product value;
adding, using the adder, the resultant product value to an accumulated value that is stored in the MAC accumulator register, to produce a resultant sum value that is stored in the MAC accumulator register;
repeating the multiplying and adding until all MAC instructions and corresponding sets of input data values that are dispatched to that processing engine have been processed; and
outputting, by the MAC accumulator register, the resultant sum value as the MAC value.

13. The processor of claim 8, wherein the MAC device is a scalar MAC device, wherein each of the two or more first MAC operations is a scalar MAC operation, wherein the MAC value and the accumulated MAC value are scalar MAC values.

14. The processor of claim 8, wherein the MAC device is a vector MAC "VMAC" device, wherein the two or more first MAC instructions are two or more first VMAC instructions, wherein each of the two or more first MAC operations is a VMAC operation, wherein the MAC value and the accumulated MAC value are VMAC values.

15. A processor (102) having hardware components comprising:

a dispatcher (108) including a first state machine (110); and
a first pipeline processing system (112) among one or more pipeline processing systems, including:

a plurality of processing engines (114), each processing engine including an arithmetic logic unit "ALU" device, which includes an ALU accumulator register; and
a pipeline accumulator register (128);

wherein the dispatcher performs first operations based on logic of the first state machine, the first operations comprising:

receiving (720) two or more first ALU instructions in two or more consecutive clock cycles of the processor, each first ALU instruction being directed to the first pipeline processing system to process input data using a corresponding first ALU operation among two or more first ALU operations;
in response to receiving the two or more first ALU instructions, dispatching (730) each of the two or more first ALU instructions and corresponding each of the two or more sets of input data values to one of a set of processing engines among a set of processing engines based on a sub-stream among a plurality of sub-streams, wherein a number of processing engines of the set of processing engines corresponds to a number of sub-streams that is used to process the two or more first ALU instructions, the two or more sets of input data values for the plurality of sub-streams being processed by the ALU devices of the set of processing engines in consecutive clock cycles, wherein an output value from the ALU device of each processing engine is stored in the ALU accumulator register for that processing engine;
in response to receiving, in a clock cycle following receipt of the two or more first ALU instructions, one of a pipeline bubble or a second ALU instruction directed to a second pipeline processing system among the one or more pipeline processing systems, initiating (745) a pipeline complete phase in which subsequent ALU instructions that are received by the dispatcher are directed away from the first pipeline processing system, wherein the pipeline bubble corresponds to an absence of an ALU instruction; and

wherein the first pipeline processing system performs second operations comprising:

adding (740) an ALU value stored in the ALU accumulator register of each of the set of processing engines to an accumulated ALU value stored in the pipeline accumulator register as each of the set of processing engines completes its ALU operations; and
after the ALU values from all of the set of processing engines have been added to the accumulated ALU value stored in the pipeline accumulator register, outputting (750) the accumulated ALU value.

Fig. 1A

EP 4 738 108 A1

Fig. 1B

Fig. 2A

200A

Fig. 2B

200B

Fig. 3

EP 4 738 108 A1

**Vector Store Pipe 410**

| (SQVP) | 450 |
| --- | --- |
| (SQVD) | 448 |
| ' | 440s |
| ' | 440r |
| ' | 440q |
| ' | 440p |
| ' | 440o |
| ' | 440n |
| ' | 440m |
| ' | 440l |
| ' | 440k |
| ' | 440j |
| ' | 440i |
| ' | 440h |
| ' | 440g |
| ' | 440f |
| ' | 440e |
| (SQSP) | 446 |
| (SQSD) | 444 |
| ' | 440d |
| ' | 440c |
| (SQA) | 442 |
| ' | 440b |
| ' | 440a |
| (SQP) | 438 |

**Vector Load Pipe 415**

| (SRW) | 460 |
| --- | --- |
| (LDF) | 458 |
| (DR9) | 456j |
| (DR8) | 456i |
| (DR7) | 456h |
| (DR6) | 456g |
| (DR5) | 456f |
| (DR4) | 456e |
| (DR3) | 456d |
| (DR2) | 456c |
| (DR1) | 456b |
| (DR0) | 456a |
| (LAF) | 454 |
| (LAA1) | 452b |
| (LAA0) | 452a |

**Vector Pipe 420**

| (VRW) | 470 |
| --- | --- |
| (VX4) | 468e |
| (VX3) | 468d |
| (VX2) | 468c |
| (VX1) | 468b |
| (VX0) | 468a |
| (VDB1) | 466 |
| (VR1/VDB0/SRW) | 464 |
| (VR0) | 462 |

**Common Scalar and Vector Pipe 405**

| (SRW) | 436 |
| --- | --- |
| (SX3) | 434d |
| (SX2) | 434c |
| (SX1) | 434b |
| (SX0) | 434a |
| (SR1) | 432b |
| (SR0) | 432a |
| (DIS1) | 430b |
| (DIS0) | 430a |
| (IBP1/IQW) | 428 |
| (IBP0) | 426 |
| (IDM) | 424 |
| (ITA) | 422 |

Fig. 4

400

**Fig. 5A**

500

Process, by the MAC device of the first pipeline processing system, the two or more sets of input data values for the plurality of sub-streams in consecutive clock cycles    535

Perform, by the MAC device, a processing cycle including processing of a set of MAC operations for each sub-stream in turn, one sub-stream at a time, until all sub-streams in the plurality of sub-streams have each had one set of MAC operations among a plurality of sets of MAC operations for that sub-stream processed by the MAC device    560

Repeat the processing cycle for a next set of VMAC operations for each sub-stream, until processing of the two or more VMAC instructions have completed    565

For each MAC operation among the set of MAC operations, where the set of MAC operations for each sub-stream in each processing cycle are performed concurrently:    570

Multiply, using a multiplier of the MAC device, a first input data value corresponding to that sub-stream with a second input data value corresponding to that sub-stream, to produce a resultant product value for that sub-stream    575

Add, using an adder of the MAC device, the resultant product value for that sub-stream to an accumulated value that is stored in a MAC accumulator register corresponding to that sub-stream, to produce a resultant sum value for that sub-stream that is stored in the MAC accumulator register    580

Output, by the MAC accumulator register, the resultant sum value as the MAC value    585

500

**Fig. 5B**

Receive, by a processor and from a compiler, machine code
605

Decode, by the processor, the machine code into instructions
610

Two or more first MAC instructions received in consecutive clock cycles?
615

No →

Yes ↓

Receive, by a dispatcher of the processor, the two or more first MAC instructions in two or more consecutive clock cycles of the processor
620

Divide, by the dispatcher, the two or more first MAC instructions and corresponding two or more sets of input data values into a plurality of sub-streams
625

Dispatch, by the dispatcher, each of the two or more first MAC instructions and corresponding each of two or more sets of input data values to one of a set of processing engines among a set of processing engines based on a sub-stream among the plurality of sub-streams
630

Initiate, by the dispatcher, a pipeline complete phase
645

After the MAC values from all of the set of processing engines have been added to the accumulated MAC value stored in the pipeline accumulator register, outputting, by the first pipeline processing system, the accumulated MAC value
650

Perform a compound operation by processing a combination MAC operation using the accumulated MAC value from the first pipeline processing system as an input
655

Process, by each MAC device of the first pipeline processing system, a corresponding set of first MAC instructions based on the sub-stream associated with that MAC device
635

Add, by the first pipeline processing system, a MAC value stored in the MAC accumulator register of each of the set of processing engines to an accumulated MAC value stored in a pipeline accumulator register as each of the set of processing engines completes its MAC operations
640

600

**Fig. 6A**

Process, by each MAC device of the first pipeline processing system, the corresponding set of first MAC instructions based on the sub-stream associated with that MAC device — 635

Multiply, using a multiplier of that MAC device, a first input data value with a second input data value, to produce a product value — 660

Add, using an adder of that MAC device, the resultant product value to an accumulated value stored in a MAC accumulator register, to produce a sum value — 665

Repeat until all MAC instructions and corresponding sets of input data values dispatched to that processing engine have been processed — 670

Output, by the MAC accumulator register, the resultant sum value as the MAC value — 675

600

**Fig. 6B**

Receive, by a processor and from a compiler, machine code — 705

Decode, by the processor, the machine code into instructions — 710

Two or more first ALU instructions received in consecutive clock cycles? — 715

No →

Yes ↓

Receive, by a dispatcher of the processor, the two or more first ALU instructions in two or more consecutive clock cycles of the processor — 720

Divide, by the dispatcher, the two or more first ALU instructions and corresponding two or more sets of input data values into a plurality of sub-streams — 725

Dispatch, by the dispatcher, each of the two or more first ALU instructions and corresponding each of two or more sets of input data values to one of a set of processing engines among a set of processing engines based on a sub-stream among the plurality of sub-streams — 730

Initiate, by the dispatcher, a pipeline complete phase — 745

After the ALU values from all of the set of processing engines have been added to the accumulated ALU value stored in the pipeline accumulator register, outputting, by the first pipeline processing system, the accumulated ALU value — 750

Perform a compound operation by processing a combination ALU operation using the accumulated ALU value from the first pipeline processing system as an input — 755

Process, by each ALU device of the first pipeline processing system, a corresponding set of first ALU instructions based on the sub-stream associated with that ALU device — 735

Add, by the first pipeline processing system, an ALU value stored in the ALU accumulator register of each of the set of processing engines to an accumulated ALU value stored in a pipeline accumulator register as each of the set of processing engines completes its ALU operations — 740

700

**Fig. 7**

COMPUTING DEVICE

SYSTEM MEMORY

OPERATING SYSTEM

805

PROGRAM MODULES

APPLICATIONS

HARDWARE-ENHANCED MAC / VMAC / ALU STREAMING FUNCTION

851

850

806

804

PROCESSING UNIT

802

808

REMOVABLE STORAGE

809

NON-REMOVABLE STORAGE

810

INPUT DEVICE(S)

812

OUTPUT DEVICE(S)

814

COMMUNICATION CONNECTIONS

816

800

OTHER COMPUTING DEVICES

818

Fig. 8

## EUROPEAN SEARCH REPORT

Europäisches
Patentamt
European
Patent Office
Office européen
des brevets

**Application Number**

**EP 25 20 7000**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/113170 A1 (ABDALLAH MOHAMMAD A [US]) 30 April 2009 (2009-04-30) * paragraphs [0033], [0049], [0051], [0065], [0067], [0071] * ----- | 1-15 | INV. G06F9/30 G06F9/38 |
| X | US 2023/148225 A1 (THOMAS MANU MATHEW [US] ET AL) 11 May 2023 (2023-05-11) * paragraphs [0316], [0326], [0329], [0330], [0334] * ----- | 1,8,15 | |

**TECHNICAL FIELDS SEARCHED (IPC)**

G06F

The present search report has been drawn up for all claims

| Place of search | Date of completion of the search | Examiner |
|---|---|---|
| The Hague | 12 March 2026 | Gratia, Romain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 7000

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2026

| Patent document cited in search report | | Publication date | Patent family member(s) | | Publication date |
|---|---|---|---|---|---|
| US 2009113170 | A1 | 30-04-2009 | CN | 101449256 A | 03-06-2009 |
| | | | CN | 103646009 A | 19-03-2014 |
| | | | EP | 2011018 A2 | 07-01-2009 |
| | | | EP | 2477109 A1 | 18-07-2012 |
| | | | US | 2009113170 A1 | 30-04-2009 |
| | | | US | 2013091340 A1 | 11-04-2013 |
| | | | US | 2015269118 A1 | 24-09-2015 |
| | | | US | 2018137081 A1 | 17-05-2018 |
| | | | US | 2019227982 A1 | 25-07-2019 |
| | | | WO | 2007143278 A2 | 13-12-2007 |
| US 2023148225 | A1 | 11-05-2023 | CN | 117581259 A | 20-02-2024 |
| | | | EP | 4427197 A1 | 11-09-2024 |
| | | | US | 2023148225 A1 | 11-05-2023 |
| | | | WO | 2023081565 A1 | 11-05-2023 |

EPO FORM P0459

For more details about this annex : see Official Journal of the European Patent Office, No. 12/82